# EUROPÄISCHE PATENTSCHRIFT

(11) **EP 4 376 609 B1**
(45) Veröffentlichungstag und Bekanntmachung des Hinweises auf die Patenterteilung: **22.10.2025**
(21) Anmeldenummer: 23748509.9
(22) Anmeldetag: 26.07.2023
(51) Int. Cl.: A01M 21/04

(54) **BIOMASSEN-BESTIMMUNG VON PFLANZEN**
DETERMINATION OF BIOMASS IN PLANTS
DÉTERMINATION DE LA BIOMASSE DANS LES PLANTES

(30) Priorität: 14.10.2022 DE 102022126885
(43) Veröffentlichungstag der Anmeldung: 05.06.2024
(73) Patentinhaber: crop.zone GmbH, 52076 Aachen (DE)
(72) Erfinder: VANDENHIRTZ, Dirk, 52076 Aachen (DE); EFFEY, Fabian, 52076 Aachen (DE); EBERIUS, Matthias, 52076 Aachen (DE)
(74) Vertreter: PATERIS Patentanwälte PartmbB
(86) Internationale Anmeldenummer: PCT/EP2023/070777
(87) Internationale Veröffentlichungsnummer: WO 2024/078767

(56) Entgegenhaltungen:
- WO-A1-2018/050142
- DE-A1- 102021 114 692
- DE-B3- 102012 206 416

## Beschreibung

Die Erfindung betrifft ein Verfahren, ein Computerprogrammprodukt und eine Auswerte-Vorrichtung zur Biomassen-Bestimmung von Pflanzen, insbesondere während einer Sikkation von Feldfrüchten, zur Gründüngungskontrolle oder zur Kontrolle von Beikraut. Ferner betrifft die Erfindung ein Trägerfahrzeug mit einer derartigen Auswerte-Vorrichtung und einen Bausatz, enthaltend Komponenten einer derartigen Auswerte-Vorrichtung.

Sikkation (deutsch: Austrocknung) bezeichnet einen Vorgang in der Landwirtschaft, bei dem Kulturpflanzenbestände u.a. mit Sikkaten zum Zwecke der Abreifebeschleunigung abgetötet werden. Es erleichtert die Ernte und begünstigt den Reifezustand der Ackerfrüchte. Diese chemische Sikkation ahmt den natürlichen Austrocknungsprozess des Welkens von einjährigen Kulturpflanzen bei der Fruchtreife nach, bei dem oberirdische, grüne Pflanzenbestandteile und oberflächennahe Wurzeln und andere Pflanzenbestandteile abtrocknen. Ein willkommener Nebeneffekt ist die gleichzeitige Abtötung von Unkräutern, deren noch grüne Pflanzenteile andernfalls z.B. mit Getreide abgeerntet und den Feuchtigkeitsgehalt des Ernteguts erhöhen würden und deren Samenausfall oder weiterer Aufwuchs die Unkrautdichte auf den Feldern erhöhen kann.

Als Feld- oder Ackerfrüchte werden Kulturpflanzen bezeichnet, die auf Feldern angebaut werden. Zu den Feldfrüchten zählen Getreide, Hack- und Hülsenfrüchte, Ölfrüchte oder Pflanzen zur Grünernte, die wie z. B. Silomais als Futtermittel oder zur Energiegewinnung genutzt werden.

Gründüngung ist eine natürliche Methode im Ackerbau zur Bodenbedeckung und -verbesserung. Man bezeichnet damit in erster Linie den gezielten Anbau mit anschließender Abtötung von Pflanzen, die nicht abgeerntet werden, sondern z.B. zum Erosionsschutz, der Nährstoffsicherung oder der Bodenverbesserung / Humusbildung auf dem Feld verbleiben. Hierzu können auch Zwischenfrüchte in der letzten Nutzungsphase verwendet werden. Als Zwischenfrucht bezeichnet man eine Feldfrucht, die zwischen anderen zur Hauptnutzung dienenden Feldfrüchten als Gründüngung oder zur Verwendung als Tierfutter angebaut wird.

Als Kontrolle von Beikraut unabhängig vom Standort wird die allgemein als Unkrautkontrolle beschriebene Methode bezeichnet, bei der beliebige Pflanzen, die am aktuellen Wuchsstandort (Feld, Wiese, Weide, Verkehrsbereich Bauwerkteile oder andere), zu einem gewählten Zeitpunkt aus funktionalen oder ästhetischen Gründen nicht gewünscht sind, durch geeignete Verfahren, hier elektrophysikalische Verfahren so behandelt werden, dass sie komplett absterben oder in ihrem weiteren Wachstum deutlich geschwächt oder gehemmt oder auf ein früheres Stadium zurückgesetzt werden.

Wenn elektrischer Strom Pflanzenteile durchströmt, werden diese in Abhängigkeit von elektrischer Stromstärke, elektrischer Spannung, Stromtyp (Gleichstrom, Wechselstrom, Frequenz, Glättungsgrad bzw. Restwelligkeit etc.) geschädigt. Eine umfassende und einheitliche Theorie der Wirkung liegt bisher nicht vor. Als gesichert anzunehmen ist, dass insbesondere die Leitbündel zum Flüssigkeitstransport in der Pflanze als die Teile mit dem geringsten elektrischen Widerstand so geschädigt werden, dass sie funktionsunfähig werden und die Pflanze in der Folge in Abhängigkeit vom Schadensgrad und den Wetterbedingungen eingeht und vertrocknet. Bei hohem Energieeinsatz kann es auch zur lokalen thermischen Zerstörung von Pflanzengewebe kommen.

Die Verwendung von elektrischem Gleichstrom zur Elektro-Behandlung von Pflanzen ist z.B. aus der US 2,007,383 und der WO 2019 / 052591 A1 bekannt, während die Verwendung von elektrischem Gleich- oder Wechselstrom z.B. aus der WO 2018 / 095450 A1 oder der WO 2018 / 050142 A1 bekannt ist.

Aus der DE 10 2020 115 923 A1 ist eine weitere Vorrichtung zur Elektro-Behandlung von Pflanzen bekannt.

Aus der DE 10 2021 114 692 A1 ist ein weiteres Verfahren zur Behandlung von Pflanzen bekannt.

Aus der DE 10 2012 206 416 B3 ist eine Zuchtvorrichtung für phototrophe Kulturen bekannt.

Herkömmlicherweise werden bei dem Applizieren von elektrischem Strom auf Pflanzen zwei metallische Applikatoren verwendet, um zumindest den elektrischen Widerstand an der Kontaktstelle möglichst gering zu halten.

Derartige Applikatoren werden auch als Langapplikatoren (Langreichweitenapplikatoren, auch Zungenapplikatoren oder LRB, von englisch "Long Range Blade") bezeichnet. Derartige Applikatoren weisen z.B. einen Abstand von 0,8 m bis 1 m auf. Es können aber auch Kurzapplikatoren (SRA - für englisch: Short Range Blade) verwendet werden, deren Abstand im Bereich von 0,1 m bis 0,5 m liegt.

Weiterhin wird in einigen Fällen der Stromkreis nicht durch einen zweiten Kontakt an Pflanzen mit dem entgegengesetzten Pol, sondern durch in den Boden einschneidende Elektroden geschlossen.

Der Anbau von Gründüngung oder - in geringerem Umfang - auch von Zwischenfrüchten hat als Effekt eine Aufnahme und Speicherung von Kohlendioxid in den Pflanzen zur Folge. Dieser Kohlenstoff kommt dann anteilig der Ernährung und Verbesserung des Bodenlebens und der Bodenstruktur (Erosionsminderung, Wasseraufnahmefähigkeit) zu Gute und wird langfristig als Humus der Erdatmosphäre entzogen. Dies ist zum Erreichen der Klimaneutralität der Landwirtschaft und der Wirtschaft generell wichtig. Deshalb gibt es monetäre Anreizsysteme, die in Abhängigkeit von der neu im Boden gespeicherten Menge an Kohlendioxid Vergütungszahlungen an die Landwirte vorsehen. Die direkte Messung des neuen Kohlenstoffs im Boden ist jedoch technologisch extrem aufwändig bis kaum möglich und hängt darüber hinaus noch von vielen Umgebungsfaktoren ab, die der Landwirt nicht beeinflussen kann.

Deshalb ist eine Bestimmung der Biomasse als indikatives Maß für die aufgenommene Kohlendioxidmenge die bestmögliche Voraussetzung für eine faktenbasierte, transparente Vergütung. Dabei wird unter Biomasse die Biomasse von Landpflanzen verstanden, die sich aus lebender und toter Biomasse (abgestorbene oder abgestoßene Pflanzenteile, abgebrochene/abgerissene Blätter, Seitensprosse, Zweige und Äste sowie Wurzeln) zusammensetzen kann.

Bekannt ist es, die Biomasse im Rahmen einer Fernerkundung, z.B. durch Auswerten von Satellitenbildern, zu bestimmen. Jedoch sind derartige Verfahren nicht tagesaktuell zum Zeitpunkt der Beendigung des Wachstums der Gründüngung möglich, sondern beruhen auf Satellitenbildern oft älteren Datums, je nach Wetterbedingungen und Überflughäufigkeit mit Abweichungen im Bereich von Tagen und Wochen. Des Weiteren ist die räumliche Auflösung der Biomassen-Bestimmung abhängig von der Auflösung der Satellitenbilder und reicht nicht zur sicheren Messung an Feldrändern und bei dem oft üblichen heterogenen Aufwuchs der bestimmungsgemäß nicht optimal gedüngten Abbaubereiche. Bei Wolken über mehrere Wochen kann es komplett unmöglich sein. Gerade bei sehr vielfältigen Saatgut- und Pflanzenmischungen in der Gründüngung mit mehreren Blattebenen ist eine optische Biomassebestimmung von oben im Gegensatz zu ertragsoptimierten Monokulturen von einheitlichen Feldfrüchten kaum möglich/mit großen Fehlern behaftet. Auch Tageszeit und himmelsrichtungsabhängige Schattenbereiche von Bäumen, Ackerrandgehölzen, Gebäuden oder anderen Gegenständen können die Messung besonders bei kleineren Flächen in Randbereichen unsicher, damit fehlerbehaftet und nicht rechtssicher für ein Vergütungsverfahren gestalten.

Ferner ist aus der WO 2021 / 233892 A1 ein Verfahren zur Elektro-Behandlung von Pflanzen bekannt. Es weist einen Erfassungsmodus zur Erfassung von Pflanzen und einen Behandlungsmodus zum Töten der Pflanzen auf. Hierzu sind Hardware- und Software-Komponenten vorgesehen, um einen Pflanzentyp durch Auswerten von Bilddaten zu bestimmen.

Aus der WO 2020 / 182829 A ist ein Verfahren zur Elektro-Behandlung von Pflanzen bekannt, bei dem eine elektrische Größe - eine Impedanz oder eine elektrische Leistung - erfasst wird.

Aus der WO 2020 / 182829 A1 ist es bekannt, eine elektrische Größe, die in Relation zur Impedanz der Pflanzen steht, kontinuierlich zu erfassen und die Leistung entsprechend anzupassen, um das Behandlungsergebnis zu optimieren.

Aus der WO 2016 / 162667 A1 ist ein weiteres Verfahren zur Elektro-Behandlung von Pflanzen bekannt, bei dem eine elektrische Leistung durch Anpassen der elektrischen Spannung konstant gehalten wird.

Es besteht also Bedarf daran, Wege aufzuzeigen, wie hier Verbesserungen hinsichtlich der Aktualität, Messgenauigkeit und/oder Auflösung insbesondere für Gründüngungskulturen und Zwischenfrüchte erreicht werden können.

Die Aufgabe der Erfindung wird gelöst durch ein Verfahren zur Biomassen-Bestimmung von Pflanzen, insbesondere während einer Sikkation von Feldfrüchten zur Gründüngungskontrolle oder zur Kontrolle von Beikraut, mit den Schritten:
mit einem Leistungsbestimmungs-Modul Erfassen zumindest eines Wertes indikativ für eine elektrische Gleichstrom-Leistungsabgabe über Applikatoren einer Behandlungs-Vorrichtung zur Behandlung von Pflanzen durch Beaufschlagen mit elektrischem Gleichstrom, wobei zum Erfassen zumindest eines Wertes indikativ für eine elektrische Gleichstrom-Leistungsabgabe eine an den Applikatoren anliegende elektrische Gleichspannung und ein durch die Applikatoren fließender elektrischer Gleichstrom erfasst und ausgewertet wird,
mit einem Flächenbestimmungs-Modul Erfassen zumindest eines Wertes indikativ für die Größe einer mit der Behandlungs-Vorrichtung behandelten Fläche, und
mit einem Biomassen-Bestimmungs-Modul Bestimmen eines Wertes indikativ für die Biomasse der Pflanzen auf der behandelten Fläche als indikatives Maß für die im Boden aufgenommene Kohlendioxidmenge durch Auswerten zumindest des Wertes indikativ für eine elektrische Gleichstrom-Leistungsabgabe und des Wertes indikativ für die Größe der mit der Behandlungs-Vorrichtung behandelten Fläche.

Mit anderen Worten, es wird die auf eine Fläche mit Pflanzen aufgebrachte elektrische Gleichstromleistung sowie die Größe der behandelten Fläche erfasst. Da überraschenderweise festgestellt wurde, dass es einen Zusammenhang zwischen der aufgebrachten elektrischen Gleichstromleistung und dem Pflanzenbewuchs gibt, kann durch zusätzliches Erfassen der Größe der behandelten Fläche die Biomasse der Pflanzen auf der behandelten Fläche zuverlässig bestimmt werden.

Der Wert indikativ für eine elektrische Gleichstrom-Leistungsabgabe kann als elektrische Momentanleistung aufgefasst werden. Ein Absolutwert für die Biomasse auf der behandelten Fläche kann z.B. durch eine Integration der elektrischen Gleichstrom-Leistungsabgabe bzw. elektrischen Momentanleistung über die Zeit bzw. Behandlungsdauer bestimmt werden, z.B. durch eine nummerische Integration. Mit anderen Worten, es können für Flächenabschnitte der Fläche jeweilige Teilwerte indikativ für die Biomasse bestimmt werden und dann zum Absolutwert für die Biomasse aufsummiert werden.

Dabei wird unter der elektrischen Gleichstromleistung eine elektrische Leistung elektrischer Gleichströme verstanden, deren Stärke variieren kann, nicht aber deren Richtung. Mit anderen Worten, es erfolgt kein Polaritäts- oder Stromrichtungswechsel, sondern die elektrischen Spannungen und/oder elektrischen Ströme sind richtungswechsel- bzw. vorzeichenwechselfrei.

Es ist kein Rückgriff auf fehleranfällige Satellitenbilder älteren Datums und/oder mit geringer Auflösung nötig. Vielmehr erlaubt das Verfahren eine tagesaktuelle und hochaufgelöst-ortsgenaue Bestimmung der Biomasse, die von der räumlichen Auflösung allein durch einen Applikatorabstand von Applikatoren einer Applikatorreihe z.B. quer zur Fahrtrichtung und einer Abtastrate abhängt, mit der die elektrische Gleichstrom-Leistungsabgabe erfasst wird.

Somit wird hinsichtlich der Aktualität und/oder Auflösung ein verbessertes Verfahren zur Biomassen-Bestimmung bereitgestellt.

Gemäß einer Ausführungsform wird zum Erfassen zumindest eines Wertes indikativ für eine elektrische Gleichstrom-Leistungsabgabe eine an den Applikatoren anliegende elektrische Gleichspannung und/oder ein durch die Applikatoren fließender elektrischer Gleichstrom erfasst und ausgewertet. Z.B. können die elektrische Gleichspannung und der elektrische Gleichstrom zeitgleich durch Messen erfasst und ausgewertet werden, um die Gleichstrom-Leistungsabgabe zu bestimmen. Dies erlaubt es, einen Wert für den ohmschen Widerstand der beaufschlagten Pflanze zu bestimmen. Es kann aber auch vorgesehen sein, dass z.B. ein Wert für den ohmschen Widerstand einer zu beaufschlagenden Pflanze vorab bestimmt wird. Erst danach wird die elektrische Gleichstrom-Leistungsabgabe anhand des Wertes für den ohmschen Widerstand der beaufschlagten Pflanze und der elektrischen Gleichspannung oder des elektrischen Gleichstroms bestimmt.

Gemäß einer weiteren Ausführungsform ist die Behandlungs-Vorrichtung dazu ausgebildet, Pflanzen mit einer einem Sollwert entsprechenden elektrischen Gleichstrom-Leistungsabgabe zu beaufschlagen. Mit anderen Worten, die Behandlungs-Vorrichtung weist einen als Leistungs-Regler ausgebildeten Regler auf, der eine im Wesentlichen, d.h. innerhalb zulässiger Regelabweichungen liegende, konstante Gleichstrom-Leistungsabgabe gewährleisten soll. Hierzu passt der Regler z.B. die Höhe einer elektrischen Gleichspannung durch Bereitstellen einer Stellgröße an.

Gemäß einer weiteren Ausführungsform wird zum Erfassen zumindest eines Wertes indikativ für die Größe einer mit der Behandlungs-Vorrichtung behandelten Fläche zumindest eine Fahrgeschwindigkeit eines Trägerfahrzeugs und/oder eine Breite einer Applikatorreihe der Behandlungs-Vorrichtung quer zu einer Fahrtrichtung des Trägerfahrzeugs erfasst und ausgewertet. So kann die Größe der behandelten Fläche besonders einfach erfasst werden. Die Fahrgeschwindigkeit des Trägerfahrzeugs kann z.B. mit einem Tacho des Trägerfahrzeugs erfasst und z.B. über einen 7-poligen Stecker nach ISO 11786 oder über eine ISOBUS-Schnittstelle eingelesen werden. Z.B. kann ein Fahrer des Trägerfahrzeugs einzelne Applikatoren abschalten und/oder zuschalten. Eine Erfassung der aktiven Applikatoren und die Berücksichtigung deren Anzahl in Kombination mit der Fahrgeschwindigkeit des Trägerfahrzeugs erfolgt automatisch.

Gemäß einer weiteren Ausführungsform wird zum Bestimmen des Wertes indikativ für die Biomasse ein vegetationsspezifischer Faktor berücksichtigt. Durch den vegetationsspezifischen Faktor kann z.B. eine Art und/oder eine Form und/oder eine Größe und/oder ein Zustand der Pflanzen berücksichtigt werden. Hierzu kann der pflanzenspezifische Faktor auf einer Mehrzahl an entsprechenden Teilfaktoren beruhen. Dies erlaubt es, den Wert indikativ für die Biomasse mit gesteigerter Genauigkeit zu bestimmen.

Gemäß einer weiteren Ausführungsform wird zum Bestimmen des Wertes indikativ für die Biomasse ein Wert indikativ für einen elektrischen Widerstand des Bodens der behandelten Fläche berücksichtigt. Der Wert indikativ für einen elektrischen Widerstand des Bodens kann vorab oder auch zeitgleich während der Bestimmung der Biomasse messtechnisch erfasst werden und erlaubt es, den Wert indikativ für die Biomasse mit gesteigerter Genauigkeit zu bestimmen.

Gemäß einer weiteren Ausführungsform erfolgt in einem weiteren Schritt ein gezieltes Auftragen eines Stoffgemisches auf mindestens ein Pflanzenteil, wobei das Stoffgemisch mindestens eine den elektrischen Übergangswiderstand im Bereich der pflanzlichen Oberfläche senkende Komponente aufweist, wobei das Stoffgemisch mindestens eine erste Komponente aufweist, die mindestens eine oberflächenaktive Substanz ausgewählt aus der Gruppe bestehend aus Tensiden enthält, und mindestens eine zweite Komponente aufweist, die mindestens eine viskositätserhöhende Substanz ausgewählt aus der Gruppe bestehend aus reinen Kieselsäuren, pyrogenen Kieselsäuren, Mischoxiden, Magnesium-Schichtsilikaten, organischen Additiven auf der Basis von biogenen Ölen und deren Derivaten, Polyamiden und modifizierten Kohlenhydraten enthält.

Des Weiteren kann das Stoffgemisch eine oder mehrere Komponenten aufweisen, wobei eine der Komponenten Mehrfachwirkungen aufweist, wie z.B. die Wirkung einer oberflächenaktiven Substanz und die Wirkung einer viskositätserhöhenden Substanz.

Es ist eine Verwendung eines Stoffgemisches zur Wirkungssteigerung von auf Pflanzen appliziertem elektrischem Strom vorgesehen, das mindestens eine den elektrischen Übergangswiderstand im Bereich der pflanzlichen Oberfläche senkende Komponente aufweist, wobei das Stoffgemisch mindestens eine erste Komponente aufweist, die mindestens eine oberflächenaktive Substanz ausgewählt aus der Gruppe bestehend aus Tensiden enthält, und mindestens eine zweite Komponente aufweist, die mindestens eine viskositätserhöhende Substanz ausgewählt aus der Gruppe bestehend aus reinen Kieselsäuren, pyrogenen Kieselsäuren, Mischoxiden, Magnesium-Schichtsilikaten, organischen Additiven auf der Basis von biogenen Ölen und deren Derivaten, Polyamiden und modifizierten Kohlenhydraten enthält.

Die Verwendung des übergangswiderstandsenkenden Stoffgemisches ermöglicht vorteilhaft einen Einsatz nicht stoffwechsel-chemisch, sondern auf die Blätter physikalisch-chemisch wirkender Stoffe in Kombination mit einer elektrophysikalischen Behandlung, z.B. um in einem Arbeitsgang bei einer Feldüberfahrt Unkraut oder Zwischenfrüchte abzutöten und sofort oder sehr kurzfristig danach neu einzusäen. Damit werden Kosten und die in vielen Regionen knappen Wachstumstage gespart. Weiterhin erhöht sich die Wirksamkeit der Unkrautkontrolle signifikant, da die schnellkeimenden Kulturpflanzen eine wesentlich größere Möglichkeit haben, die Lichtkonkurrenz mit Unkräutern durch frühes Auflaufen zu gewinnen. Besonders vorteilhaft ist dies gegenüber bodenbewegenden Unkrautkontrollmethoden, weil beim hier beschriebenen Kombinationsverfahren keine Samen neu zur Keimung durch Licht etc. angeregt werden, keine Energie zur Bodenbewegung benötigt wird und mangels Bodenbewegung auch kein CO2 durch Humusabbau aus dem Boden freigesetzt wird.

Die Verwendung des Stoffgemisches ermöglicht vorteilhaft ein Überwinden hydrophob wirkender pflanzlicher Oberflächenstrukturen und isolierender Luftspalte, wodurch die elektrische Leitfähigkeit zwischen einem elektrischen Applikator und einer Pflanze erhöht und dadurch elektrischer Strom effektiver auf die Pflanze appliziert werden kann. Die Verwendung des Stoffgemisches ermöglicht im Vergleich zu herkömmlichen Verfahren der Pflanzenvernichtung mit Herbiziden oder Strom eine kostengünstige und effektive Methode, um unerwünschte Pflanzen selektiv zu eliminieren.

Die Verwendung des Stoffgemisches ermöglicht aufgrund der Eigenschaften des Stoffgemischs das Übertragen von elektrischem Strom auf eine Pflanze mit deutlich verringertem Widerstand gegenüber der Applikation von elektrischem Strom auf Pflanzen nur mittels fester, üblicherweise metallischer Applikatoren. Die Verwendung des Stoffgemischs ermöglicht sowohl ein widerstandsreduziertes Überwinden von den Stromfluss störenden Strukturen der Applikatoren (Unebenheiten, Anhaftungen) und der Pflanze, wie z.B. Luftschichten (verstärkt durch Haare, Blattunebenheiten, Stacheln), und auch ein effektiveres Leiten von Strom in den durchleiteten Materialien und Schichten, so dass eine systemische, pflanzenschädigende Wirkung partiell oder bis in die Wurzeln bei niedrigem Energieaufwand entsteht. Durch die Verwendung des Stoffgemisches wird somit eine Wirkungssteigerung eines stromapplizierenden Verfahrens erreicht.

Das Stoffgemisch wird auch als übergangswiderstandsenkendes Stoffgemisch oder auch als übergangswiderstandsenkendes Medium bezeichnet. Das übergangswiderstandsenkende Stoffgemisch bzw. Medium ist z.B. eine wässrige Flüssigkeit, eine viskose Flüssigkeit, eine hochviskose Flüssigkeit, ein Öl, eine hochkonzentrierte Lösung, eine thixotrope Flüssigkeit, eine Suspension, eine Emulsion, ein Feststoff oder ein Schaum, ohne auf diese Aufzählung beschränkt zu sein.

Die erste Komponente wird auch als Komponente A bezeichnet. Die oberflächenaktive Substanz aus der Gruppe der Tenside umfasst vorteilhafterweise nichtionische Tenside und ionische Tenside mit hoher biologischer Abbaubarkeit. Die oberflächenaktiven Substanzen wirken vorteilhaft beim Benetzen einer Pflanzenoberfläche. Während zwar fast alle oberflächenaktiven Substanzen eingesetzt werden können, sind Stoffklassen und Produkte mit einer hohen biologischen Abbaubarkeit und ökologischer Landwirtschaftskompatibilität bevorzugt: Naturidentische oder naturähnliche Biotenside, vorzugsweise industriell verfügbare nichtionische Zuckertenside wie Alkylpolyglucoside (APGs), Saccharoseester, andere Zuckerester, Methylglycosidester, Ethylglycosidester, N-Methylglucamide oder Sorbitanester (z. B. von Solverde), amphotere Tenside wie z. B. Cocoamidopropylbetain (CAPB) oder anionische Tenside (z. B. Natriumlaurylsulfat von Solverde).

Weitere beispielhafte Verbindungen der Komponente A werden im Folgenden genannt. Dabei sind Aufzählungen, auch der weiteren Komponenten, nicht abschließend, sondern stehen auch stellvertretend für Verbindungen mit analoger Wirkung im Sinne der Erfindung, in diesem Falle der oberflächenaktiven Wirkung:
- Nichtionische Zuckertenside:
- Alkylpolyglucoside (APGs): Die Alkylreste haben 4 bis 40 Kohlenstoffatome aller möglichen Isomere, vorzugsweise bestehen sie aus linearen Ketten mit Hauptanteilen von 8 bis 14 Kohlenstoffatomen wie sie z. B. in aus Palmöl hergestellten Fettsäurealkoholen vorkommen. Die Glucoside sind Isomere und Anomere mit 1 - 15 Zuckereinheiten, vorzugsweise Glucose mit einem Polymerisierungsgrad zwischen 1 und 5 Einheiten oder auch andere Zuckerester wie Saccharose (Saccharoseester), Sorbitane (Sorbitanester).
- Glycosidester: Ester mit Alkoholen C1-C14 alle Isomere, auch ungesättigt und zusätzlich mit Carbonsäure, Aldehydgruppen und Alkoholgruppen funktionalisiert, vorzugsweise Methyl- und Ethylglycosidester.
- N-Methylglucamide mit Kohlenstoffketten C1-C30 alle Isomere, auch ungesättigt und zusätzlich mit Carbonsäure, Aldehydgruppen und Alkoholgruppen funktionalisiert, vorzugsweise lineare Alkylketten C2-C15.
- Amphotere Tenside:
- Cocoamidopropylbetain (CAPB) mit Kohlenstoffketten C1 - C30 alle Isomere, auch ungesättigt und zusätzlich mit Carbonsäure, Aldehydgruppen und Alkoholgruppen funktionalisiert, vorzugsweise lineare Alkylketten C2-C15.
- Anionische Tenside:
   Als Beispiel für ein anionisches Tensid wird Natriumlaurylsulfat verwendet. Es können jedoch auch Gemische mit verschiedenen Alkylresten (C4-C20) der LAS (Lineare Alkylbenzolsulfonate) aber auch der SAS (Sekundäre Alkansulfonate), FAS (Fettalkoholsulfate) und Seifen verwendet werden.

Die zweite Komponente wird auch als Komponente B bezeichnet. Die viskositätserhöhende Substanz ist vorzugsweise eine thixotrope Substanz oder ein Substanzgemisch der organischen oder anorganischen rheologischen Additive. Die Substanzen der Komponente B weisen vorteilhafterweise eine hohe biologische Verträglichkeit bzw. Abbaubarkeit auf, so dass sie mit ökologischer Landwirtschaft kompatibel sind. Die unter dem Stoffgemisch genannten Substanzen bzw. Verbindungen sind beispielhaft: reine oder pyrogene Kieselsäuren, z. B. Sipernat oder Aerosil von Evonik; Mischoxide, z. B. Magnesium-Aluminiumsilikate wie Attapulgit (^{®}Attagel von BASF Formulation Additives); Magnesium-Schichtsilikate, z.B. Bentonite oder Hectorite (z. B. Optigel oder Garamite von BYK); organische Additive auf der Basis von biogenen Ölen wie z.B. Rizinusöl oder Sojaöl: z. B. Polythix von FINMA; aus dem synthetischen Bereich Polyamide, z.B. Polyacrylamide, z. B. Disparlon von King Industries; Stärke; modifizierte Cellulosen, z.B. Methylzellulose, Gummi arabicum, Carmellose-Natrium, Caragen, Carbomer, Hydroxy(m)ethylcellulose, polyanionische Cellulose, Saccharide, Tragant, vorverkleisterte Stärke oder Xanthangummi.

Das biogene Öl ist vorzugsweise aus der Gruppe bestehend aus Rapsöl, Sonnenblumenöl, Kokosöl, Rizinusöl und Sojaöl ausgewählt.

Die Derivate der Öle können beispielsweise deren Salze oder Ester sein.

Die viskositätserhöhende Substanz ist vorzugsweise zugleich die den elektrischen Übergangswiderstand im Bereich der pflanzlichen Oberfläche senkende Komponente.

Vorzugsweise weist das Stoffgemisch mindestens eine weitere Komponente auf, die mindestens eine leitfähigkeitserhöhende Substanz ausgewählt aus der Gruppe bestehend aus anorganischen Salzen, Kohlenstoff, Huminstoffen, chelatisiertem Eisen, anderen chelatisierten Metallionen und weiteren Metallionen mit Komplexbildnern aufweist. Diese Komponente wird auch als Komponente C bezeichnet. Die besagten Substanzen und/oder Substanzgemische der Komponente C sind beispielhaft: anorganische Salze: Magnesiumsulfat, Na/K2SO4; Kohlenstoff: amorphe oder graphitische Modifikationen wie z.B. Graphitsuspensionen von CP Grafitprodukte, Graphen oder röhrchenartige Kohlenstoffmodifikationen, vorzugsweise auch gemahlene Biokohle wie z.B. Pflanzenkohle500+ von Egos; Gegenionen zu den in den Komponenten des Stoffgemischs eingesetzten Salzen: z. B. Na+, K+, Mg2+, Ca2+; Huminstoffe: z. B. Liqhumus von Humintech; chelatisiertes Eisen: z. B. Humiron von Humintech; mit GLDA (Tetranatrium-N, N-bis(carboxylatomethyl)-L-glutamat, z.B. von Solverde) oder anderen biologisch abbaubaren Verbindungen chelatisierte Metallionen, vorzugsweise Eisen. Die Metallionen können auch von anderen Komplexbildnern aus der Gruppe der mehrzähnigen Komplexbildner komplexiert werden. Statt Eisen können andere zwei- oder dreiwertige Metallionen verwendet werden.

Bei der Frage der leitfähigkeitserhöhenden Substanzen ist zu beachten, dass es sich nur bei den anorganischen Salzen und den anorganischen Gegenionen organischer Substanzen um die klassische Erhöhung der Leitfähigkeit einer Lösung handelt. Insbesondere bei den Kohlenstoffderivaten und auch bei den höhermolekularen Huminstoffen wird die Leitfähigkeit der Blattoberflächen auch bei festen Stoffgemischen, z.B. im getrockneten Zustand eines übergangswiderstandsenkenden Mediums erhöht. Derartige Trocknungsvorgänge treten sehr schnell auf, wenn z.B. übergangswiderstandsenkende Medien mit geringer Wasserverdünnung besonders an heißen Tagen aufgetragen werden oder wenn die Flüssigkeitsfilme durch die Applikatoren größerflächig über die Blattfläche verteilt werden. Deshalb ist eine spezifische Leitfähigkeitserhöhung besonders vorteilhaft im Sinne der Erfindung.

Vorzugsweise weist das Stoffgemisch mindestens eine weitere Komponente auf, die mindestens eine hygroskopische oder verdunstungssenkende Substanz ausgewählt aus der Gruppe bestehend aus Ölen, Mikrogelen und Polyalkoholen ist. Diese Komponente wird auch als Komponente D bezeichnet. Die besagten Substanzen und/oder Substanzgemische der Komponente D sind beispielhaft: Öle: Rapsöl, Sonnenblumenöl, Olivenöl (ggf. zur Stabilitätserhöhung heißgepresste Fraktionen), auch Rapsöl-Fertigprodukte wie Micula der Firma Evergreen Garden Care; Mikrogele: Acrylsäuregele (Superabsorber); Polyalkohole: Glycerin.

Vorzugsweise weist das Stoffgemisch mindestens eine weitere Komponente auf, die mindestens eine wachserweichende Substanz ausgewählt aus der Gruppe bestehend aus Ölen, Estern, Alkoholen, Polypeptiden und alkoxylierten Triglyceriden enthält. Diese Komponente wird auch als Komponente E bezeichnet. Die besagten Substanzen und/oder Substanzgemische der Komponente E sind beispielhaft: Öle: Rapsöl, Sonnenblumenöl, Olivenöl (ggf. zur Stabilitätserhöhung heißgepresste Fraktionen), auch Rapsöl-Fertigprodukte wie Micula der Firma Evergreen Garden Care; Ester: Fettsäureester (Ester mit Alkoholen C1 - C10 aller Isomere, auch ungesättigt und zusätzlich mit Carbonsäure, Aldehydgruppen und Alkoholgruppen funktionalisiert), auch Fertigprodukte wie HASTEN (Fa. Vicchem), ein Rapsölethylester; alkoxylierte Triglyceride: auch als Fertigprodukt KANTOR der Firma Agroplanta.

Vorzugsweise weist das Stoffgemisch mindestens eine weitere Komponente auf, die mindestens eine physikalisch-phytotoxische Substanz und/oder wachsschichtauflösende Substanz ausgewählt aus der Gruppe bestehend aus Karbonsäuren, Terpenen, aromatischen Ölen, Alkalien, funktionalisierten Polypeptiden, anorganischen Alkalien und organischen Alkalien enthält. Diese Komponente wird auch als Komponente F bezeichnet. Unter physikalisch-phytotoxischen Substanzen werden hier besonders die Wachsschicht einer Pflanze unspezifisch oder spezifisch zerstörende Substanzen verstanden, sowie anderweitig phytotoxisch wirkende Substanzen. Die besagten Substanzen und/oder Substanzgemische der Komponente F sind beispielhaft: Karbonsäuren: Pelargonsäure (C9) (z. B. Pelargonsäure in Finalsan von Neudorff) oder andere verzweigte oder unverzweigte Carbonsäuren mit kürzerem (<C9), gleich langem (=C9) oder längeren (>C9) linearen oder verzweigten gesättigten oder einfach oder mehrfach ungesättigten Kohlenstoffketten (z. B. Capronsäure, Caprylsäure und Caprinsäure). Diese Kohlenstoffketten können durch weitere funktionale Gruppen wie Alkohole, Aldehyde oder Carbonsäuregruppen einfach oder mehrfach zusätzlich funktionalisiert sein. Terpene: terpenhaltige Öle; aromatische Öle: Citronellöl (auch Fertigprodukte von Barrier/UK), Eugenol z. B. aus Gewürznelkenöl (auch Fertigprodukte wie Skythe /USA), Pinienöl (auch Fertigprodukte der Firma Sustainableformulations), Pfefferminzöle (z. B. Biox-M von Certis); Alkalien: anorganische Alkalien (z.B. NaOH, KOH) oder organische Alkalien (z. B. Salze von Fettsäuren oder Huminsäuren z. B. Liqhumus von Humintech).

Die Komponente E kann ebenfalls zur Zerstörung der Wachsschicht (d.h. als Komponente F) eingesetzt werden. Dazu muss die Komponente E ausreichend heiß sein. Vorzugsweise werden hochsiedende organische Substanzen mit geringem Wasseranteil oder ohne Wasseranteil eingesetzt. Ein heißes Öl ist besonders bevorzugt.

Vorzugsweise weist das Stoffgemisch mindestens eine weitere Komponente zur Haftungsverstärkung auf, die mindestens eine haftungsfördernde Substanz und/oder mindestens eine haftungsverstärkende Substanz enthält. Die haftungsfördernde Substanz ist ausgewählt aus der Gruppe der Schaumbildner bestehend aus Tensiden, Proteinen und deren Derivaten. Die haftungsverstärkende Substanz (indem die Viskosität weiter erhöht wird) ist ausgewählt aus der Gruppe bestehend aus organischen rheologischen Additiven, anorganischen rheologischen Additiven (vorzugsweise mit hoher biologischer Verträglichkeit), reinen Kieselsäuren, pyrogenen Kieselsäuren, Mischoxiden, Magnesium-Schichtsilikaten, organischen Additiven auf der Basis von biogenen Ölen und deren Derivaten, und Polyamiden. Diese Komponente wird auch als Komponente G bezeichnet. Die Komponente G bewirkt dabei ein eingeschränktes Bewegen bzw. Verteilen des Stoffgemischs auf einer entsprechenden Pflanze bzw. mehreren, dichtstehenden Pflanzen.

Die Tenside können nichtionische oder anionische Tenside sein, z.B. Schaummarkierungsmittel von Kramp oder Proteinschaumbildner der Firma Dr.Stha-mer. Von den weiteren haftungsverbessernden Substanzen und/oder Substanzgemischen der Komponente G sind beispielhaft: reine oder pyrogene Kieselsäuren: Sipernat oder Aerosil von Evonik; Mischoxide: Magnesium-Aluminiumsilikate, z.B. Attapulgit (^{®}Attagel von BASF Formulation Additives); Magnesium-Schichtsilikate; Bentonite oder Hectorite (z. B Optigel oder Garamite von BYK); organische Additive auf der Basis von biogenen Ölen wie z.B. Rizinusöl oder Sojaöl: Polythix von FINMA; Polyamide: Disparlon von King Industries.

Das biogene Öl ist vorzugsweise aus der Gruppe bestehend aus Rapsöl, Sonnenblumenöl, Kokosöl, Rizinusöl und Sojaöl ausgewählt.

Die Derivate der Öle können beispielsweise deren Salze oder Ester sein.

Vorzugsweise weist das Stoffgemisch mindestens eine weitere Komponente auf, die mindestens eine ionisierungsfördernde Substanz ausgewählt aus der Gruppe bestehend aus anorganischen Salzen, Kohlenstoff, Huminstoffen, chelatisiertem Eisen und anderen chelatisierten Metallionen enthält. Diese Komponente wird auch als Komponente H bezeichnet. Von den weiteren Substanzen und/oder Substanzgemischen der Komponente H sind beispielhaft: anorganische Salze: Na/K2SO4 oder andere, Gegenionen zu eingesetzten Salzen von organischen Säuren (Na+, K+); Kohlenstoff: amorphe oder graphitische Modifikationen wie z.B. Graphitsuspensionen von CP Grafitprodukte, Graphen oder röhrchenartige Kohlenstoffmodifikationen, vorzugsweise auch gemahlene Biokohle wie z.B. Pflanzenkohle500+ von Egos; Huminstoffe: Liqhumus von Humintech; chelatisiertes Eisen: Humiron von Humintech, mit GLDA (Tetranatrium-N, N-bis(carboxylatomethyl)-L-glutamat, z.B. von Solverde) oder anderen biologisch abbaubaren Verbindungen chelatisierte Metallionen, vorzugsweise Eisen.

Vorzugsweise weist das Stoffgemisch mindestens eine weitere Komponente auf, die mindestens eine Trägerflüssigkeit ausgewählt aus der Gruppe bestehend aus Wasser, organischen Flüssigkeiten, Pflanzenölen, Estern von Pflanzenölen und Fettsäureestern enthält. Diese Komponente wird auch als Komponente I bezeichnet. Die Trägerflüssigkeiten sind vorteilhaft zum Verdünnen des Stoffgemischs geeignet. Von den Substanzen und/oder Substanzgemischen der Komponente I sind beispielhaft: Organische Flüssigkeiten: Pflanzenöle; Ester von Pflanzenölen (Ester mit Alkoholen C1 - C10 alle Isomere, auch ungesättigt und zusätzlich mit Carbonsäure, Aldehydgruppen und Alkoholgruppen funktionalisiert) und Fettsäureester (Ester von Fettsäuren mit C4 - C30, dabei alle Isomere, auch ungesättigter Fettsäuren mit Alkoholen mit C1 - C10, dabei alle Isomere, auch ungesättigt und zusätzlich mit Carbonsäure, Aldehydgruppen und Alkoholgruppen funktionalisiert).

Vorzugsweise weist das Stoffgemisch mindestens eine weitere Komponente auf, die mindestens eine die Lagerfähigkeit oder eine Tankmischung stabilisierende Substanz enthält. Diese Komponente wird auch als Komponente J bezeichnet. Die Substanzen und/oder Substanzgemische der Komponente J sind beispielhaft Emulgatoren wie Poloxamer (BASF), mittelkettige Triglyceride und/oder Biozide, dabei bevorzugt Stoffe mit hoher biologischer Abbaubarkeit.

Wie aus den beschriebenen Komponenten hervorgeht, gibt es einige Substanzen, die eine Mehrfachfunktion erfüllen, d.h. unter verschiedenen Komponenten Verwendung finden können, und deshalb bevorzugt eingesetzt werden. Insbesondere zu nennen sind hierbei Huminstoffe, Pflanzenöle und ihre Ester (Ester mit Alkoholen C1 - C25 aller Isomere, auch ungesättigt und zusätzlich mit Carbonsäure, Aldehydgruppen und Alkoholgruppen funktionalisiert, vorzugsweise Fettalkohole aus natürlichen Quellen), und leitfähigkeitserhöhende Komponenten.

Vorteilhafterweise wird das Stoffgemisch in Abhängigkeit vom Anwendungsziel aus den bevorzugten Komponenten zusammengestellt (in Klammern werden fakultative Komponenten genannt, die je nach Anwendungsziel vorteilhaft hinzugefügt werden können):
a) Anwendungsziel Benetzung: Mischungen der Stoffgruppen A + B (+C/D/H/I/J);
b) Anwendungsziel spezifische Erhöhung der Leitfähigkeit der Oberfläche: Mischungen der Stoffgruppen A + B + C (+D/H/I/J);
c) Anwendungsziel Aufweichung der Wachsschicht: Mischungen der Stoffgruppen A + B + E (+C/D/H/I/J);
d) Anwendungsziel Zerstörung der Wachsschicht: Mischungen der Stoffgruppen A + B + F (+C/D/H/I/J);
e) Anwendungsziel Überbrückung von Widerständen: Mischungen der Stoffgruppen A + B + G (+C/D/H/I/J);
f) Komponente H wird nur eingesetzt, wenn die elektrostatische Aufladung von Pflanzen und Medium genutzt werden kann;
g) Andere Kombinationen von A + B mit den Komponenten C/D/E/F/G/H/I/J können zum Bewirken von Kombinationseffekten zum Erhöhen der Effektivität eingesetzt werden.

Vorteilhaft für die Zerstörung der Wachsschicht vor oder bei der elektrophysikalischen Behandlung ist die Zerstörung mit erhitzten Medien generell und insbesondere mit heißem Öl (in Komponente E) in den Bereichen, die mit den elektrischen Applikatoren in Berührung kommen. Das dafür nötige dosierte Aufsprühen von geringen Mengen heißem Öl (0,5 - 20 l/ha, vorzugsweise 2 - 10 l/ha) nur auf die oberen Blattbereiche verringert die Aufwandmenge gegenüber der reinen (bekannten) Abtötung der Pflanzen durch heißes Öl stark, weil die elektrophysikalische Behandlung bei geringem Widerstand dann systemisch wirkt.

Vorzugsweise weist das Stoffgemisch neben der ersten Komponente (Komponente A) und der zweiten Komponente (Komponente B) mindestens eine weitere Komponente auf, wobei die weitere Komponente die Komponente C, die Komponente E und/oder die Komponente F ist. Die Komponenten C, E und F sind sowohl jede für sich als auch in Kombination besonders effektiv, um den elektrischen Übergangswiderstand im Bereich der pflanzlichen Oberfläche zu senken. Der Übergangswiderstand wird durch die Leitfähigkeitserhöhung in Schichten im Bereich der pflanzlichen Oberfläche (Komponente C), durch das Erweichen (Aufweichen) der Schichten im Bereich der pflanzlichen Oberfläche (Komponente E) und/oder durch das Auflösen (Zerstören) der Schichten im Bereich der pflanzlichen Oberfläche (Komponente F) gegenüber einer Behandlung ohne das Stoffgemisch signifikant verringert.

Als Komponente C weist das Stoffgemisch vorzugsweise Huminstoffe und/oder chelatisiertes Eisen auf, wobei das chelatisierte Eisen bevorzugt durch Huminsäuren chelatisiertes Eisen ist. Als Komponente F weist das Stoffgemisch vorzugsweise Fettsäuren, Gemische von Fettsäuren und/oder alkalisierte Huminstoffe auf, wobei die Fettsäuren bevorzugt in alkalisierter und/oder chelatisierter Form vorliegen.

Besonders bevorzugt weist das Stoffgemisch neben der ersten Komponente (Komponente A) und der zweiten Komponente (Komponente B) mindestens eine weitere Komponente auf, wobei die weitere Komponente die Komponente C und/oder die Komponente E ist.

Vorzugsweise weist das Stoffgemisch neben der ersten Komponente (Komponente A) und/oder der zweiten Komponente (Komponente B) mindestens eine weitere Komponente auf, wobei die weitere Komponente die Komponente C, die Komponente D und/oder die Komponente E ist.

Offenbart ist weiterhin eine Verwendung eines Stoffgemischs zur Wirkungssteigerung von auf Pflanzen appliziertem elektrischem Strom, wobei das Stoffgemisch mindestens eine den elektrischen Übergangswiderstand im Bereich der pflanzlichen Oberfläche senkende Komponente aufweist, wobei das Stoffgemisch mindestens eine Komponente A und eine Komponente C aufweist,
wobei die Komponente A mindestens eine oberflächenaktive Substanz ausgewählt aus der Gruppe bestehend aus Tensiden enthält, und
wobei die Komponente C mindestens eine leitfähigkeitserhöhende Substanz ausgewählt aus der Gruppe bestehend aus anorganischen Salzen, Kohlenstoff, Huminstoffen, chelatisiertem Eisen, anderen chelatisierten Metallionen und Metallionen mit Komplexbildnern enthält.

Vorzugsweise weist das Stoffgemisch der offenbarten Verwendung mindestens eine weitere Komponente auf, wobei die weitere Komponente ausgewählt ist aus der Gruppe bestehend aus einer Komponente B, einer Komponente D, einer Komponente E, einer Komponente F, einer Komponente G, einer Komponente H, einer Komponente I und einer Komponente J.

Die Komponenten A, B, C, D, E, F, G, H, I und J des Stoffgemischs der offenbarten Verwendung entsprechen den Komponenten A, B, C, D, E, F, G, H, I und J des oben beschriebenen Stoffgemischs für die erfindungsgemäße Verwendung. Die für das Stoffgemisch der erfindungsgemäßen Verwendung beschriebenen Merkmale und Beispiele der Komponenten A, B, C, D, E, F, G, H, I und J gelten für das Stoffgemisch der offenbarten Verwendung daher gleichermaßen.

Offenbart ist weiterhin eine Verwendung eines Stoffgemischs zur Wirkungssteigerung von auf Pflanzen appliziertem elektrischem Strom, wobei das Stoffgemisch mindestens eine den elektrischen Übergangswiderstand im Bereich der pflanzlichen Oberfläche senkende Komponente aufweist, wobei das Stoffgemisch mindestens eine Komponente B und eine Komponente C aufweist,
wobei die Komponente B mindestens eine viskositätserhöhende Substanz ausgewählt aus der Gruppe bestehend aus reinen Kieselsäuren, pyrogenen Kieselsäuren, Mischoxiden, Magnesium-Schichtsilikaten, organischen Additiven auf der Basis von biogenen Ölen und deren Derivaten, Polyamiden und modifizierten Kohlenhydraten enthält, und
wobei die Komponente C mindestens eine leitfähigkeitserhöhende Substanz ausgewählt aus der Gruppe bestehend aus anorganischen Salzen, Kohlenstoff, Huminstoffen, chelatisiertem Eisen, anderen chelatisierten Metallionen und Metallionen mit Komplexbildnern enthält.

Vorzugsweise weist das Stoffgemisch der offenbarten Verwendung mindestens eine weitere Komponente auf, wobei die weitere Komponente ausgewählt ist aus der Gruppe bestehend aus einer Komponente A, einer Komponente D, einer Komponente E, einer Komponente F, einer Komponente G, einer Komponente H, einer Komponente I und einer Komponente J.

Die Komponenten A, B, C, D, E, F, G, H, I und J des Stoffgemischs der offenbarten Verwendung entsprechen den Komponenten A, B, C, D, E, F, G, H, I und J des oben beschriebenen Stoffgemischs für die erfindungsgemäße Verwendung. Die für das Stoffgemisch der erfindungsgemäßen Verwendung beschriebenen Merkmale und Beispiele der Komponenten A, B, C, D, E, F, G, H, I und J gelten für das Stoffgemisch der offenbarten Verwendung daher gleichermaßen.

Offenbart ist weiterhin eine Verwendung eines Stoffgemischs zur Wirkungssteigerung von auf Pflanzen appliziertem elektrischem Strom, wobei das Stoffgemisch mindestens eine den elektrischen Übergangswiderstand im Bereich der pflanzlichen Oberfläche senkende Komponente aufweist, wobei das Stoffgemisch mindestens zwei Komponenten ausgewählt aus der Gruppe bestehend aus einer Komponente C, einer Komponente E und einer Komponente F aufweist,
wobei die Komponente C mindestens eine leitfähigkeitserhöhende Substanz ausgewählt aus der Gruppe bestehend aus anorganischen Salzen, Kohlenstoff, Huminstoffen, chelatisiertem Eisen, anderen chelatisierten Metallionen und Metallionen mit Komplexbildnern enthält,
wobei die Komponente E mindestens eine wachserweichende Substanz ausgewählt aus der Gruppe bestehend aus Ölen, Estern, Alkoholen, Polypeptiden und alkoxylierten Triglyceriden enthält, und
wobei die Komponente F mindestens eine physikalisch-phytotoxische und/oder wachsschichtauflösende Substanz ausgewählt aus der Gruppe bestehend aus Karbonsäuren, Terpenen, aromatischen Ölen, Alkalien, funktionalisierten Polypeptiden, anorganischen Alkalien und organischen Alkalien enthält.

Die Komponenten C, E und F des Stoffgemischs der offenbarten Verwendung entsprechen den Komponenten C, E und F des oben beschriebenen Stoffgemischs für die erfindungsgemäße Verwendung. Die für das Stoffgemisch der erfindungsgemäßen Verwendung beschriebenen Merkmale und Beispiele der Komponenten C, E und F gelten für das Stoffgemisch der offenbarten Verwendung daher gleichermaßen.

Vorzugsweise weist das Stoffgemisch der offenbarten Verwendung entweder die Komponente C und die Komponente E oder die Komponente C und die Komponente F auf.

Vorzugsweise weist das Stoffgemisch der offenbarten Verwendung mindestens eine weitere Komponente auf, wobei die weitere Komponente ausgewählt ist aus der Gruppe bestehend aus einer Komponente A, einer Komponente B, einer Komponente D, einer Komponente G, einer Komponente H, einer Komponente I und einer Komponente J.

Die Komponenten A, B, D, G, H, I und J des Stoffgemischs der offenbarten Verwendung entsprechen den Komponenten A, B, D, G, H, I und J des oben beschriebenen Stoffgemischs für die erfindungsgemäße Verwendung. Die für das Stoffgemisch der erfindungsgemäßen Verwendung beschriebenen Merkmale und Beispiele der Komponenten A, B, D, G, H, I und J gelten für das Stoffgemisch der offenbarten Verwendung daher gleichermaßen.

Durch das Aufbringen des Stoffgemisches wird erreicht, dass lediglich der innere Widerstand der Pflanzen als indikativer Wert für die Biomasse gemessen werden kann, da andere mögliche Widerstandsanteile, wie z.B. der Übergangswiderstand der Pflanzen sehr gering sind.

Des Weiteren ist vorgesehen, bei Elektro-Behandlungen von Pflanzen, insbesondere während einer Sikkation von Feldfrüchten, zur Gründüngungskontrolle oder zur Kontrolle von Beikraut, zumindest den Schritt
Beaufschlagen von Pflanzen mit einer elektrischen Spannung mit einem Spitze-Tal-Wert kleiner 1000 V
durchzuführen.

Dabei wird unter dem Spitze-Tal-Wert (früher Spitze-Spitze-Wert) die Schwankungsbreite der elektrischen Spannung vom niedrigsten Wert (einschließlich negativer Werte) bis zum höchsten Wert während einer Periode verstanden. Mit anderen Worten, sie entspricht der Differenz zwischen einem Maximalwert und einem Minimalwert der elektrischen Spannung.

Es wurde überraschenderweise festgestellt, dass, wenn der Spitze-Tal-Wert kleiner 1000 V ist, die Anzahl von ungewollten Spannungsüberschlägen, begleitet von Lichtbögen zwischen zwei Applikatoren mit unterschiedlichem Potential, die sich in einer Applikatoreinheit oder in Applikatoreinheiten befinden, signifikant reduziert werden kann.

So wird es möglich, eine Mehrzahl von Applikatoren gestaffelt in einer Applikatorreihe anzuordnen und ohne ungewollte Spannungsüberschläge und/oder Lichtbögen zu betreiben. Außerdem wird es so möglich, eine Mehrzahl von Applikatoreinheiten in Fahrtrichtung nebeneinander oder hintereinander in einer Applikatorreihe anzuordnen. Dies erlaubt eine gezielt nur in die Pflanzensprosse oder nur flach in den Boden wirkende Elektro-Behandlung von Pflanzen mit einer Mehrzahl von Applikatoren in einer Applikatoreinheit mit reduziertem Abstand voneinander.

Vorzugsweise ist die elektrische Spannung eine Wechselspannung. Unter einer Wechselspannung wird dabei eine elektrische Spannung verstanden, bei der es innerhalb einer Periode der Wechselspannung zu einem Vorzeichenwechsel kommt. Mit anderen Worten, während einer ersten Halbwelle sind die Spannungswerte z.B. positiv, während sie während einer zweiten Halbwelle negativ sind. Die Form der elektrischen Wechselspannung kann z.B. sinusförmig, rechteckförmig, dreieckförmig, z.B. sägezahnförmig, oder auch trapezförmig sein. Die Wechselspannung kann symmetrisch sein. Dann sind die Beträge eines Maximalwertes und eines Minimalwertes der Wechselspannung gleich groß und entsprechen der Amplitude der Wechselspannung. Der Spitze-Tal-Wert entspricht dann der doppelten Amplitude der Wechselspannung. Ferner kann die Wechselspannung auch unsymmetrisch sein. Mit anderen Worten, eine symmetrische Wechselspannung wurde additiv mit einer konstanten Gleichspannung überlagert, sodass das Ergebnis eine unsymmetrische Wechselspannung ist. Dabei können der Maximalwert und der Minimalwert beide positiv, der Maximalwert positiv und der Minimalwert negativ, oder der Maximalwert und der Minimalwert beide negativ sein. Das Pendeln zwischen dem Maximalwert und dem Minimalwert kann mit einer festen Frequenz oder mit einer variablen Frequenz, wie bei einem frequenzmodulierten Signal, erfolgen. So kann die Anzahl von ungewollten Spannungsüberschlägen, begleitet von Lichtbögen, z.B. zwischen zwei Applikatoren einer Applikatoreinheit, insbesondere zwischen Applikatoren benachbarter Applikatoreinheiten, signifikant reduziert werden, wenn als elektrische Spannung eine derartige Wechselspannung verwendet wird.

Vorzugsweise ist die elektrische Spannung eine gleichgerichtete und geglättete Gleichspannung. Unter einer Gleichspannung wird dabei eine elektrische Spannung verstanden, bei der es zu keinem Vorzeichenwechsel kommt. Die gleichgerichtete und geglättete Spannung kann von einem Brückengleichrichter, wie einem Vollbrückengleichrichter, bereitgestellt werden, die von einem oder mehreren nachgeschalteten Glättungskondensatoren geglättet wird. Somit setzt sich die gleichgerichtete und geglättete Gleichspannung aus einem konstanten Gleichwert und einem Restwelligkeitswert additiv zusammen, wobei der Restwelligkeitswert zwischen einem Maximalwert und einem Minimalwert schwankt. Die Differenz zwischen dem Maximalwert und dem Minimalwert entspricht dann dem Spitze-Tal-Wert. Die Restwelligkeit kann Werte bis zu 20 % annehmen und im Frequenzbereich von 20 kHz bis 200 kHz, von 20 kHz bis 300 kHz, oder von 20 kHz bis 500 kHz liegen. So kann die Anzahl von ungewollten Spannungsüberschlägen, begleitet von Lichtbögen zwischen zwei Applikatoren einer Applikatoreinheit, insbesondere zwischen benachbarten unterschiedlich gepolten Applikatoren einer Applikatoreinheit, signifikant reduziert werden, wenn als elektrische Spannung eine derartig gleichgerichtete und geglättete Gleichspannung verwendet wird.

Vorzugsweise ist die elektrische Spannung eine gepulste Gleichspannung. Dabei wird unter einer gepulsten Gleichspannung eine elektrische Spannung verstanden, bei der es zu keinem Vorzeichenwechsel kommt, die Höhe der elektrischen Gleichspannung aber zwischen einem Maximalwert und einem Minimalwert pendelt. Die gepulste Gleichspannung kann symmetrisch sein. Dann sind die Beträge eines Maximalwertes und eines Minimalwertes der gepulsten Gleichspannung gleich groß und entsprechen der Amplitude der gepulsten Gleichspannung. Der Spitze-Tal-Wert entspricht dann der doppelten Amplitude der gepulsten Gleichspannung. Das Pendeln zwischen dem Maximalwert und dem Minimalwert kann mit einer festen Frequenz oder mit einer variablen Frequenz, wie bei einem pulsweitenmodulierten Signal (PWM-Signal), erfolgen. Die Form der elektrischen Gleichspannung kann z.B. rechteckförmig, dreieckförmig, z.B. sägezahnförmig, oder auch trapezförmig sein. So kann die Anzahl von ungewollten Spannungsüberschlägen, begleitet von Lichtbögen zwischen zwei Applikatoren mit unterschiedlichem Potential, die sich in einer Applikatoreinheit oder in Applikatoreinheiten befinden, signifikant reduziert werden, wenn als elektrische Spannung eine derartig gepulste Gleichspannung verwendet wird.

Vorzugsweise weist die elektrische Spannung einen Minimalwert größer Null auf. Eine derartige elektrische Spannung kann als unsymmetrisch gepulste Gleichspannung aufgefasst werden. Mit anderen Worten, eine symmetrische, gepulste Gleichspannung wurde additiv mit einer konstanten Gleichspannung überlagert, sodass das Ergebnis eine unsymmetrisch gepulste Gleichspannung ist. Dabei können der Maximalwert und der Minimalwert beide positiv, der Maximalwert positiv und der Minimalwert negativ, oder der Maximalwert und der Minimalwert beide negativ sein. So kann die Anzahl von ungewollten Spannungsüberschlägen, begleitet von Lichtbögen zwischen zwei Applikatoren einer Applikatoreinheit, insbesondere zwischen Applikatoren benachbarter Applikatoreinheiten, signifikant reduziert werden, wenn als elektrische Spannung eine derartig unsymmetrisch gepulste Gleichspannung verwendet wird.

Ferner gehören zur Erfindung ein Computerprogrammprodukt und eine Auswerte-Vorrichtung zur Biomassen-Bestimmung, ein Trägerfahrzeug, wie eine selbstfahrende Landmaschine oder ein Anhänger eines Gespanns, mit einer derartigen Auswerte-Vorrichtung und ein Bausatz, enthaltend Komponenten einer derartigen Auswerte-Vorrichtung.

Es wird nun die Erfindung anhand der Figuren erläutert. Es zeigen:
- Figur 1: in schematischer Darstellung eine Seitenansicht einer Ausführungsform eines Trägerfahrzeugs mit einer Behandlungs-Vorrichtung zur Behandlung von Pflanzen.
- Figur 2: in schematischer Darstellung eine Draufsicht des in Figur 1 gezeigten Trägerfahrzeugs mit einer Auswerte-Vorrichtung zur Biomassen-Bestimmung.
- Figur 3: in schematischer Darstellung einen der Behandlungs-Vorrichtung zugeordneten HV-Umrichter.
- Figur 4: in schematischer Darstellung weitere Komponenten der in der Figur 2 gezeigten Auswerte-Vorrichtung.
- Figur 5: in schematischer Darstellung Spannungsverläufe.
- Figur 6: in schematischer Darstellung weitere Spannungsverläufe.
- Figur 7: in schematischer Darstellung elektrische Leistungsverläufe.
- Figur 8: in schematischer Darstellung einen Verfahrensablauf zum Betrieb des in den Figuren 1 und 2 gezeigten Trägerfahrzeugs.

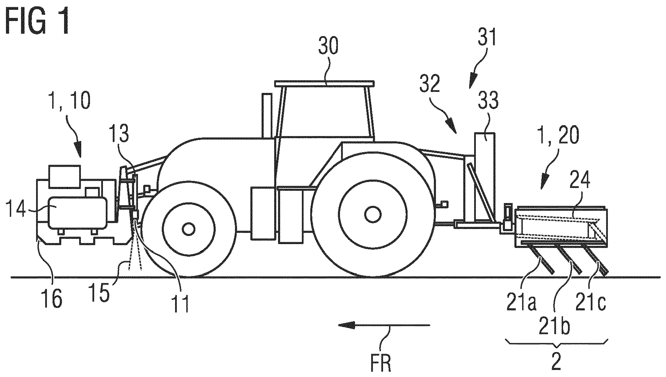

Es wird zunächst auf die Figur 1 Bezug genommen.

In Fig. 1 ist eine Anordnung einzelner Komponenten einer Behandlungs-Vorrichtung 1 zur Behandlung von Pflanzen an einer als Trägerfahrzeug 30 dienenden Landmaschine dargestellt.

Mit der Behandlungs-Vorrichtung 1 kann z.B. eine Sikkation oder allgemein Kontrolle/Abtötung durch Beaufschlagen von Pflanzen mit elektrischem Strom bewirkt werden. Dabei kann vorgesehen sein, vor dem Beaufschlagen mit elektrischem Strom elektrische Übergangswiderstände durch vorheriges Aufbringen eines übergangswiderstandsenkenden Mediums 15, wie z.B. einer entsprechenden Flüssigkeit, zu reduzieren.

Landmaschinen sind spezialisierte Maschinen, die vorwiegend in der Landwirtschaft eingesetzt werden. Sie können selbstfahrend ausgebildet sein oder von einem landwirtschaftlichen Zugfahrzeug, wie z.B. einem Traktor, gezogen oder an diesen fest angebaut werden. Mit anderen Worten, bei der Landmaschine kann es sich um ein Zugfahrzeug mit eigenem Antrieb oder um einen Anhänger ohne eigenen Antrieb, der von einem Zugfahrzeug gezogen wird, handeln.

Im vorliegenden Ausführungsbeispiel ist das Trägerfahrzeug 30 als Traktor ausgebildet. Abweichend vom vorliegenden Ausführungsbeispiel kann das Trägerfahrzeug 30 auch als Dünge-, Saat- oder Erntemaschine ausgebildet sein, die durch Anbringen der Komponenten der Behandlungs-Vorrichtung 1 modifiziert wurde. Hierzu können die Komponenten der Behandlungs-Vorrichtung 1 auch in Form eines Bausatzes bereitgestellt werden. Z.B. kann der Bausatz Komponenten eines als Anbaugerät ausgebildeten Behandlungs-Vorrichtung 1 aufweisen.

Die Behandlungs-Vorrichtung 1 und das Trägerfahrzeug 30 können je nach Einsatzmodus und speziellen Anforderungen der betreffenden Feldfrucht und des Behandlungszeitpunktes unterschiedlich sein.

Die Behandlungs-Vorrichtung 1 kann ein oder mehrere Module 10, 20 aufweisen, die jeweils als Anbaugerät ausgebildet sein können. Die Behandlungs-Vorrichtung 1 kann als Maschine/Agrarmaschine ausgebildet sein, d.h. als auswechselbare Ausrüstung, bestehend aus bis zu zwei Anbaugeräten, welche gleichzeitig am Trägerfahrzeug 30 montiert sind. Ferner kann die Behandlungs-Vorrichtung 1 als auswechselbare Ausrüstung ausgebildet sein, d.h. als eine Vorrichtung, die der Fahrer des Trägerfahrzeugs 30 nach deren Inbetriebnahme selbst an ihr anbringt, um ihre Funktion zu ändern oder zu erweitern, sofern diese Ausrüstung kein Werkzeug ist.

Im vorliegenden Ausführungsbeispiel weist die Behandlungs-Vorrichtung 1 ein erstes Modul 10 zum Auftragen des übergangswiderstandsenkenden Mediums 15 und ein zweites Modul 20 zum Übertragen von elektrischem Gleichstrom auf Pflanzen auf. Durch das Auftragen des übergangswiderstandsenkenden Mediums 15 können Übergangswiderstände, z.B. zwischen Applikatoren und kontaktierten Pflanzenteilen, reduziert werden. Durch die Reduzierung der Übergangswiderstände und der damit einhergehenden Verringerung von ohmschen Widerstandschwankungen kann der ohmsche Widerstand der behandelten Pflanzen genauer erfasst werden. Ferner wird die Neigung zur Lichtbogenbildung reduziert, was den Energieverbrauch reduziert.

Abweichend vom vorliegenden Ausführungsbeispiel kann die Behandlungs-Vorrichtung 1 aber auch nur ein zweites Modul 20 zum Übertragen von elektrischem Strom auf die Pflanzen aufweisen. Ferner kann vorgesehen sein, dass z.B. bei einem Gespann, bestehend aus einem Zugfahrzeug und einem von dem Zugfahrzeug gezogenen Anhänger, das erste Modul 10 dem Zugfahrzeug und Komponenten des zweiten Moduls 20 dem Zugfahrzeug und dem Anhänger zugeordnet sind. Auch können die Komponenten des zweiten Moduls 20 nur dem Anhänger zugeordnet sein. Des Weiteren können die Komponenten des ersten Moduls 10 und des zweiten Moduls 20 dem Anhänger zugeordnet sein.

Das übergangswiderstandsenkende Medium 15 ist in diesem Ausführungsbeispiel eine übergangswiderstandsenkende Flüssigkeit.

**In** Tabelle 1 sind wasserbasierte übergangswiderstandsenkende Medien 15 zusammengefasst. Diese sind besonders zur Verwendung auf zweikeimblättrigen Pflanzen vorgesehen.

**Tabelle 1**

| Komponentenname | Funktion | Einzustellende Aufwandmenge allgemein kg/ha Stoffklasse nach Liste Komponentenname | Einzustellende Aufwandmenge bevorzugt kg/ha bevorzugte Stoffklassen | Einzustellende Aufwandmenge Speziell kg/ha bevorzugte Stoffklasse |
|---|---|---|---|---|
| A | Tensid | 0 --4 | 0 - 2 APGs, Zuckerester, CAPB | 0,2 - 0,5 Zuckerester, CAPB |
| B | Verdicker | 0-5 | 0 - 3 Kieselsäuren Mischoxidsilikate Schichtsilikate, mod. Zellulosen | 0-2 Kieselsäuren Mischoxidsilikate Schichtsilikate |
| C | Leitfähigkeitserhöher | 1 - 10 | 1 - 10 Sulfate, Huminstoffe, chelatisiertes Eisen (GLDA) | 1 - 10 Huminstoffe, chelatisiertes Eisen, mit Huminsäuren chelatisiert, alkalisiert |
| D | Verdunstungssenkend | 0,1 - 10 | 0,1 -5 Pflanzenöle/Pflanzenölester | 0,1 - 2 Pflanzenöle |
| E | Wachsschichterweichend | 0,1 - 40 | 0,2 - 20, Öle, Polypeptide, Fettsäureester, Carbonsäure | 0,5 - 10 Öle, Fettsäureester, Carbonsäuren |
| F | Wachsschichtzerstörer | 0-40 | 0 - 20 Fettsäuren, (Pelargonsäure nur in Dosierungen 0 - 50 % der in PSM zulässigen Mengen für die jeweilige Kultur) Terpenöle, alkalisierte Huminstoffe, Eisenhaltige Metallseifen | 0 - 10, nichttoxische Carbonsäuren, Eisenhaltige Metallseifen, alkalisierte Huminstoffe |

In Tabelle 2 sind ölbasierte übergangswiderstandsenkende Medien 15 zusammengefasst. Diese sind hauptsächlich zur Verwendung auf zweikeimblättrigen Pflanzen vorgesehen.

**Tabelle 2**

| Komponentenname | Funktion | Einzustellende Aufwandmenge allgemein kg/ha Stoffklasse nach Liste Komponentenname | Einzustellende Aufwandmenge bevorzugt kg/ha bevorzugte Stoffklassen | Einzustellende Aufwandmenge Speziell kg/ha bevorzugte Stoffklasse |
|---|---|---|---|---|
| A | Tensid | 0-2 | 0 - 1 APGs, Zuckerester, CAPB | 0 - 0,2 Zuckerester, CAPB |
| B | Verdicker | 0 - 2 | 0 - 2 Kieselsäuren Mischoxidsilikate Schichtsilikate, mod. Zellulosen | 0 - 1 Kieselsäuren Mischoxidsilikate Schichtsilikate, Zellulose |
| C | Leitfähigkeitserhöher | 1-10 | 1 - 10 Sulfate, Huminstoffe, chelatisiertes Eisen (GLDA) | 1 - 10 Huminstoffe, chelatisiertes Eisen, mit Huminsäuren chelatisiert, alkalisiert |
| D | Hygroskopische Substanzen | 0,1 - 10 | 0,1 - 5 Glycerin, Mikrogele | 0,1 - 2 Glycerin |
| E | Wachsschichterweicher | 0,1 - 40 | 0,2 - 20, Öle, Polypeptide, Fettsäureester, Carbonsäure | 0,5 - 10 Öle, Fettsäureester, Carbonsäuren |
| F | Wachsschichtzerstörer | 0-40 | 0 - 20 Fettsäuren, (Pelargonsäure nur in Dosierungen 0 - 50 % der in PSM zulässigen Mengen für die jeweilige Kultur) | 0 - 10, nichttoxische Carbonsäuren, |
| | | | | Eisenhaltige Metallseifen, alkalisierte Huminstoffe |
| | | | Terpenöle, alkalisierte Huminstoffe, Eisenhaltige Metallseifen | |

In Tabelle 3 sind übergangswiderstandsenkende Medien 15 für Tröpfchenapplikationen zusammengefasst. Diese sind hauptsächlich zur Verwendung auf Gräsern vorgesehen.

**Tabelle 3**

| Komponentenname | Funktion | Einzustellende Aufwand-menge allgemein kg/ha Stoffklasse nach Liste Komponentenname | Einzustellende Aufwandmenge bevorzugt kg/ha bevorzugte Stoffklassen | Einzustellende Aufwandmenge Speziell kg/ha bevorzugte Stoffklasse |
|---|---|---|---|---|
| A | Tensid | 0-3 | 0 - 2 APGs, Zuckerester, CAPB | 0,2 - 0,5 Zuckerester, CAPB |
| B | Verdicker | 0-10 | 0 - 5 Kieselsäuren Mischoxidsilikate Schichtsilikate, mod. Zellulosen | 1 - 5 Kieselsäuren Mischoxidsilikate Schichtsilikate, mod. Zellulosen |
| C | Leitfähigkeitserhöher | 1 - 10 | 1 - 10 Sulfate, Huminstoffe, chelatisiertes Eisen (GLDA) | 1 - 10 Huminstoffe, chelatisiertes Eisen, mit Huminsäuren chelatisiert, alkalisiert |
| D | Verdunstungssenkende Substanzen | 0,1 - 10 | 0,1 - 5 Pflanzenöle/Pflanzenölester | 0,1 - 2 Pflanzenöle |
| E | Wachsschichterweicher | 0,1 - 40 | 0,2 - 20, Öle, Polypeptide, Fettsäureester, Carbonsäure | 0,5 - 10 Öle, Fettsäureester, Carbonsäuren |
| F | Wachsschichtzerstörer | 0-40 | 0 - 20 Fettsäuren, (Pelargonsäure nur in Dosierungen 0 - 50 % der in PSM zulässigen Mengen für die jeweilige Kultur) Terpenöle, alkalisierte Huminstoffe, Eisenhaltige Metallseifen | 0 - 10, nichttoxische Carbonsäuren, Eisenhaltige Metallseifen, alkalisierte Huminstoffe |

In Tabelle 4 sind übergangswiderstandsenkende Medien 15 für schaumbasierte Applikationen zusammengefasst. Diese sind hauptsächlich zur Verwendung auf Gräsern vorgesehen.

**Tabelle 4**

| Komponentenname | Funktion | Einzustellende Aufwand-menge allgemein kg/ha Stoffklasse nach Liste Komponentenname | Einzustellende Aufwandmenge bevorzugt kg/ha bevorzugte Stoffklassen | Einzustellende Aufwandmenge Speziell kg/ha bevorzugte Stoffklasse |
|---|---|---|---|---|
| A | Tensid | 0-4 | 0 - 2 APGs, Zuckerester, CAPB | 0,2 - 0,5 Zuckerester, CAPB |
| B | Verdicker | 0 - 2 | 0 - 2 Kieselsäuren Mischoxidsilikate Schichtsilikate, mod. Zellulosen | 0-2 Kieselsäuren Mischoxidsilikate Schichtsilikate |
| C | Leitfähigkeitserhöher | 1 - 10 | 1 - 10 Sulfate, Huminstoffe, chelatisiertes Eisen (GLDA) | 1 - 10 Huminstoffe, chelatisiertes Eisen, mit Huminsäuren chelatisiert, alkalisiert |
| D | Verdunstungs-senkend | 0,1 - 10 | 0,1 - 5 Pflanzenöle/Pflanzenölester | 0,1 - 2 |
| | | | | Pflanzenöle |
| | | | Glycerin, Mikrogele | Glycerin |
| E | Wachsschicht-erweicher | 0,1 - 40 | 0,2 - 20, Öle, Polypeptide, Fettsäureester, Carbonsäure | 0,5 - 10 Öle, Fettsäureester, Carbonsäuren |
| F | Wachsschicht-zerstörer | 0-40 | 0 - 20 Fettsäuren, (Pelargonsäure nur in Dosierungen 0 - 50 % der in PSM zulässigen Mengen für die jeweilige Kultur) | 0 - 10, nichttoxische Carbonsäuren, |
| | | | | Eisenhaltige Metallseifen, alkalisierte Huminstoffe |
| | | | Terpenöle, alkalisierte Huminstoffe, Eisenhaltige Metallseifen | |
| G | Schaumadditive | 0 - 2 | 0-1 | 0 - 1 |

Im vorliegenden Ausführungsbeispiel sind das erste Modul 10 an der Frontseite und das zweite Modul 20 an der Rückseite des Trägerfahrzeugs 30 angeordnet. Diese Anordnung ermöglicht es, dass das Aufbringen des übergangswiderstandsenkenden Mediums 15 immer vor oder gleichzeitig mit der elektrophysikalischen Behandlung durch Beaufschlagen mit elektrischem Strom, wie z.B. elektrischem Gleichstrom, stattfinden kann.

Das erste Modul 10 weist mindestens eine Auftragseinrichtung auf, die als Düse 11 ausgebildet ist. In Kombination mit der Düse 11 kann die Auftragseinrichtung auch einen Abstreifer (nicht dargestellt), oder alternativ selbst als Abstreifer ausgebildet sein. Die Auftragseinrichtung ist damit zum Sprühen und Abstreifen bzw. Aufbringen des übergangswiderstandsenkenden Mediums 15 ausgebildet, oder alternativ auch zum Sprühen oder Abstreifen. Das erste Modul 10 weist dabei eine Anzahl von gemeinsam oder vorzugsweise einzeln steuerbaren Düsen **11** oder Abstreifern auf, die an einer ersten Trägerkonstruktion 13 in einer gewünschten Gesamtarbeitsbreite der Behandlungs-Vorrichtung 1 (z.B. 0,3 - 48 m, vorzugsweise 6 - 27 m) und Geometrie (statisch oder flexibel gelagert oder in der Höhe sensorgesteuert) angeordnet sind. Die Düsen **11** und/oder Abstreifer werden mit dem übergangswiderstandsenkenden Medium 15, im vorliegenden Ausführungsbeispiel eine Flüssigkeit, versorgt, die in einem oder mehreren Flüssigkeitsbehältern 14 bevorratet wird. Sensoren 16 sind u.a. im Bereich der Düsen **11** angeordnet (nicht dargestellt), deren Daten bei Bedarf zum Steuern der Menge des Auftrags des übergangswiderstandsenkenden Mediums 15 verwendet werden. Weitere Sensoren 16 können an der Vorderseite des ersten Moduls 10 (d.h. in Fahrtrichtung FR) zum Zwecke der Arbeitssicherheit angeordnet sein. Als Sensoren werden z.B. Strom/Spannungssensoren, optische Sensoren, z.B. Kamerasysteme, Lage- oder Bewegungssensoren, LIDAR, Metalldetektoren und andere verwendet, ohne darauf beschränkt zu sein. Auch können voranfliegende Drohnen zum Erfassen der vorausliegenden Pflanzen eingesetzt werden. Weiterhin können Weidezaunapplikatoren zum Abschrecken oder Aufschrecken von Tieren am Trägerfahrzeug 30 oder dem zweiten Modul 20 angeordnet sein.

Im vorliegenden Ausführungsbeispiel liefert das Trägerfahrzeug 30 über eine Zapfwelle 31 oder einen Hydraulikkreislauf mechanische Antriebsenergie für einen elektrischen Generator 32 des zweiten Moduls 20, der sich im hinteren Bereich (wie gezeigt) oder vorderen Bereich am Trägerfahrzeug 30 befinden kann. Die einzelnen Module der Behandlungs-Vorrichtung 1 sind beispielsweise als Anbaugeräte angeordnet, z.B. mit Dreipunktaufhängungen. Sonderkulturen erfordern Sondermaschinen, z.T. schon als Trägerfahrzeug 30 mit speziellen Aufhängungen, ggf. auch seitlich oder unter dem Trägerfahrzeug 30. Bei Behandlungs-Vorrichtungen 1 mit sehr hohem Energiebedarf durch z.B. sehr hohe Arbeitsbreiten oder Trägerfahrzeuge 30 ohne ausreichend freie Leistungskapazitäten können auch unabhängige Stromerzeugersysteme eingesetzt werden, die auf dem Trägerfahrzeug 30 angekoppelt, aufgesattelt oder auf einem Anhänger bewegt werden können.

Elektrischer Strom wird von dem Generator 32 mit elektrischen Leitungen zu mindestens einer Transformations- und Kontrolleinheit 33 des zweiten Moduls 20 geleitet. Dort wird der elektrische Strom für die Transformation umgewandelt und dann in zentral oder verteilt positionierten Transformatoren und weiteren Steuerungseinheiten auf die vorbestimmte elektrische Spannung mit einer vorbestimmten Restwelligkeit gebracht.

Das zweite Modul 20 weist im vorliegenden Ausführungsbeispiel eine Mehrzahl an Applikatoreinheiten 2 mit jeweils einer Mehrzahl von Applikatoren 21 a, 21b, 21c zum Beaufschlagen von Pflanzen mit elektrischem Gleichstrom auf.

Unter Applikatoren 21a, 21 b, 21c werden hier jeweils einzelne, ggf. mehrfach vorhandene und räumlich voneinander getrennte elektrisch leitende und im Normalfall mit einer Hochspannungsquelle verbundene Kontakteinheiten zwischen Pflanzen verstanden. Die Applikatoren 21a, 21 b, 21c weisen im Betrieb je nach Schaltung und Kontaktierung ein unterschiedliches elektrisches Potential auf. Unter einer Applikatoreinheit 2 wird eine Einheit aus mindestens zwei Applikatoren 21a, 21b, 21c verstanden, die im Betrieb ein unterschiedliches elektrisches Potential aufweisen und mit unterschiedlichen Potentialausgängen einer einzelnen Hochspannungseinheit verbunden und damit eineindeutig zugeordnet sind und einheitlich elektrisch angesteuert werden. Es ist jedoch möglich, Teile einer Applikatoreinheit 2 elektrisch abzuschalten. Eine Applikatoreinheit 2 kann, muss aber nicht aus einer mechanisch fixierten Baugruppe bestehen und sich dadurch von anderen Applikatoreinheiten abgrenzen. So ist es ausführungsgemäß möglich, dass eine Applikatoreinheit 2 auf mehrere mechanisch und räumlich unabhängige Baugruppen verteilt ist. Umgekehrt können auch mehrere Applikatoreinheiten 2 zu einer in sich starren Baugruppe zusammengefasst sein.

Im vorliegenden Ausführungsbeispiel ist die Behandlungs-Vorrichtung 1 dazu ausgebildet, Pflanzen mit einer elektrischen Spannung U zu beaufschlagen, die eine gleichgerichtete und geglättete elektrische Gleichspannung ist. Im vorliegenden Ausführungsbeispiel weist die gleichgerichtete und geglättete elektrische Gleichspannung eine Spannung von 1600 V bis 5500 V mit einer maximalen Restwelligkeit von 5 % bis 20 % (im Frequenzbereich 60 kHz bis 100 kHz) auf.

Die elektrische Spannung setzt sich aus einem konstanten Gleichwert und einem Restwelligkeitswert additiv zusammen, wobei der Restwelligkeitswert zwischen einem Maximalwert und einem Minimalwert schwankt. Die Differenz zwischen dem Maximalwert und dem Minimalwert entspricht dem Spitze-Tal-Wert.

Der Spitze-Tal-Wert ist kleiner als 1000 V. Im vorliegenden Ausführungsbeispiel liegt der Spitze-Tal-Wert in Abhängigkeit von der Last (reiner ohmscher Widerstand) in einem Bereich von 100 V bis 500 V. Abweichend vom vorliegenden Ausführungsbeispiel kann der der Spitze-Tal-Wert in Abhängigkeit von der Last (reiner ohmscher Widerstand) auch einem Bereich von 50 V bis 300 V oder 100 V bis 800 V oder 300 V bis 800 V liegen. Die Restwelligkeit kann im Frequenzbereich von 20 kHz bis 200 kHz, von 20 kHz bis 300 kHz, oder von 20 kHz bis 500 kHz liegen, wobei eine zunehmende Last zu einer niedrigeren Frequenz der Restwelligkeit führt.

Im vorliegenden Ausführungsbeispiel kann die Restwelligkeit nicht durch Wahl eines größeren Glättungskondensators reduziert werden, da größere Glättungskondensatoren zu längeren Entladezeiten bis auf einen aus Sicherheitsgründen vorbestimmten Spannungswert in Höhe von z.B. 60 V führen würden. Jedoch ist es aus Sicherheitsgründen erforderlich, dass eine Restspannungshöhe von 60 V innerhalb von 1 s erreicht wird.

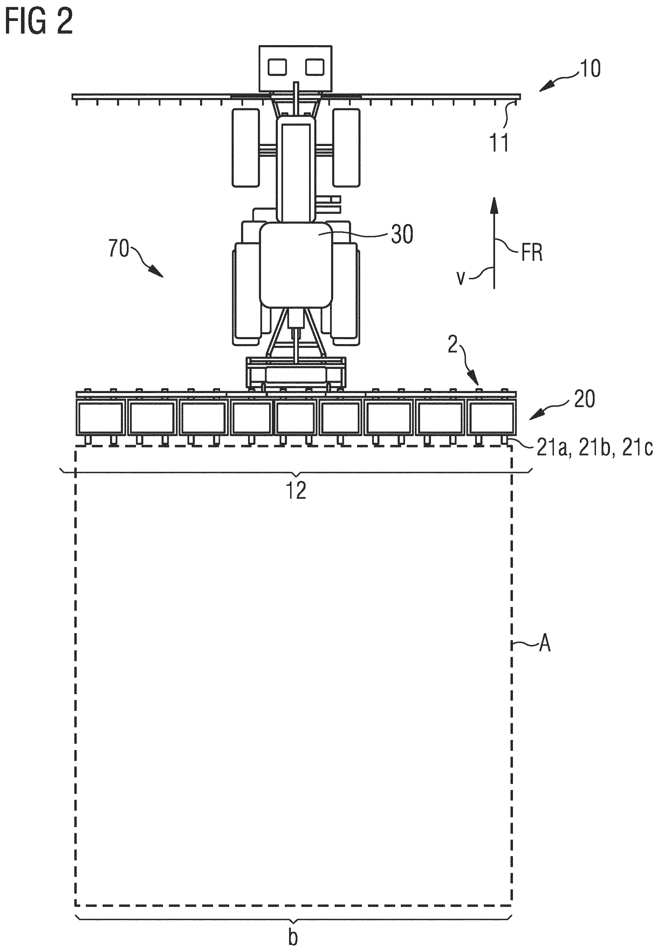

Es wird nun zusätzlich auf die Figur 2 Bezug genommen.

Die Mehrzahl der Applikatoreinheiten 2 sind in einer Applikatorreihe 12 angeordnet, wobei sich die Erstreckungsrichtung der Applikatorreihe 12 vorzugsweise quer, im vorliegenden Ausführungsbeispiel unter einem Winkel von 90°, zu der Fahrtrichtung FR des Trägerfahrzeugs 30 erstreckt. Die Applikatoren 21a, 21b, 21c der Applikatorreihe 12 sind an einer Parallelogramm-ähnlichen zweiten Trägerkonstruktion 24 angeordnet.

In der Figur 2 ist dargestellt, dass mit der Behandlungs-Vorrichtung 1 eine Fläche A mit Pflanzen durch Beaufschlagen mit elektrischem Gleichstrom behandelt wurde. Hierzu wurde von dem Trägerfahrzeug 30 die Behandlungs-Vorrichtung 1 in Fahrtrichtung FR mit einer Fahrgeschwindigkeit v über die Fläche A bewegt und über die gesamte Breite b der Applikatorreihe 12 mit elektrischem Gleichstrom beaufschlagt.

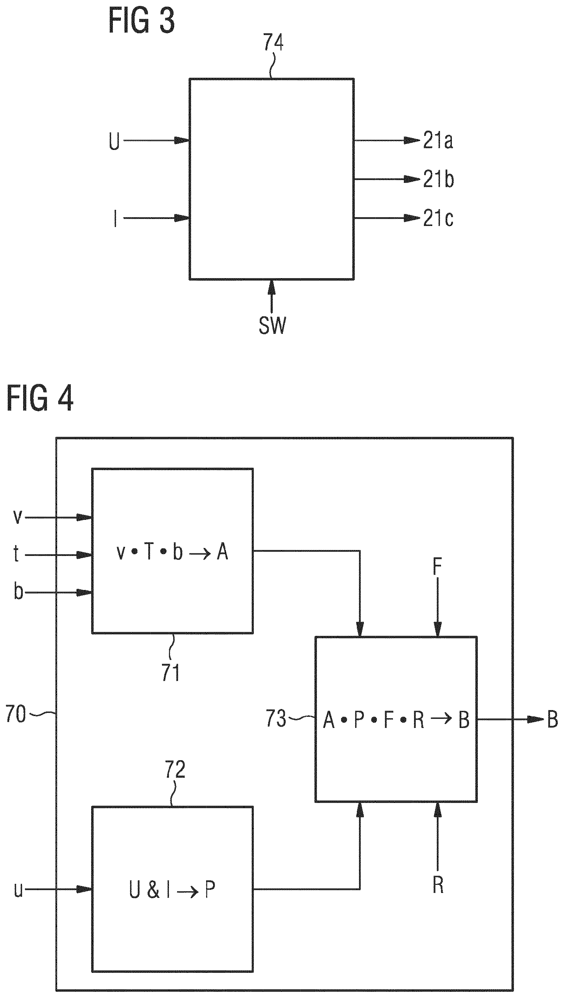

Hierzu ist der Behandlungs-Vorrichtung 1 im vorliegenden Ausführungsbeispiel ein HV-Umrichter 74 des zweiten Moduls 20 zugeordnet, der unter zusätzlicher Bezugnahme auf Figur 3 erläutert wird.

Der HV-Umrichter 20 ist mit den Applikatoren 21a, 21b, 21c elektrisch leitend verbunden. Der HV-Umrichter 20 erfasst permanent eine elektrische Gleichstromstärke und eine elektrische Gleichspannungshöhe auf einer Sekundärseite des HV-Umrichters 20, so dass zu jeder Zeit ein Wert für den ohmschen Widerstand bestimmt werden kann. Der HV-Umrichter 20 bekommt z.B. vom Fahrer einen Sollwert SW für die abzugebende Gleichstrom-Leistungsabgabe P vorgegeben. Ist der erfasste ohmsche Widerstand an den Applikatoren 21a, 21b, 21c zu groß (eine maximale elektrische Gleichspannung wird erreicht), fällt die Gleichstrom-Leistungsabgabe P entsprechend dem ohmschen Widerstand ab. Die Höhe der anliegenden elektrischen Gleichspannung bleibt aber aufgrund einer Spannungsbegrenzung unverändert. Da auch jetzt die elektrischen Gleichspannung und der elektrische Gleichstrom gemessen werden kann, kann auch in diesem Zustand ein Wert für den ohmschen Widerstand verlässlich bestimmt werden. Gleiches gilt bei einer Strombegrenzung. Ist ein maximaler elektrischer Gleichstrom erreicht, fällt auch hier die abgegebene elektrische Gleichstrom-Leistung P linear zum ohmschen Widerstand ab. Auch in diesem Betriebszustand werden weiterhin die elektrische Gleichstromstärke und die elektrische Gleichspanungshöhe auf der Sekundärseite verlässlich gemessen.

Um die Biomasse B der Pflanzen auf der behandelten Fläche A zu bestimmen, ist der Behandlungs-Vorrichtung 1 eine Auswerte-Vorrichtung 70 zur Biomassen-Bestimmung zugeordnet, deren Komponenten nun unter zusätzlicher Bezugnahme auf Figur 4 erläutert werden.

Im vorliegenden Ausführungsbeispiel weist die Auswerte-Vorrichtung 70 ein Flächenbestimmungs-Modul 71, ein Leistungsbestimmungs-Modul 72 und ein Biomassen-Bestimmungs-Modul 73 auf.

Für die nachfolgend beschriebenen Aufgaben und/oder Funktionen kann die Auswerte-Vorrichtung 70, insbesondere das Flächenbestimmungs-Modul 71, das Leistungsbestimmungs-Modul 72 und das Biomassen-Bestimmungs-Modul 73 jeweils Hardware- und/oder Software-Komponenten aufweisen.

Das Flächenbestimmungs-Modul 71 ist im vorliegenden Ausführungsbeispiel dazu ausgebildet, eine Fahrgeschwindigkeit v des Trägerfahrzeugs 30 einzulesen. Die Fahrgeschwindigkeit v kann mit einem Tacho des Trägerfahrzeugs 30 bestimmt werden und z.B. über einen 7-poligen Stecker nach ISO 11786 oder über eine ISOBUS-Schnittstelle zum Einlesen bereitgestellt werden. Alternativ kann auch eine Schneidscheibe vorgesehen sein, die auf dem Boden abrollt und deren Drehzahl erfasst und ausgewertet wird, um die Fahrgeschwindigkeit v zu bestimmen.

Des Weiteren ist das Flächenbestimmungs-Modul 71 im vorliegenden Ausführungsbeispiel dazu ausgebildet eine Fahrdauer T, beginnend mit einem Startsignal und endend mit einem Endsignal zu erfassen, wobei während der Fahrtdauer T die Pflanzen auf der Fläche A mit elektrischem Gleichstrom beaufschlagt werden.

Ferner ist das Flächenbestimmungs-Modul 71 im vorliegenden Ausführungsbeispiel dazu ausgebildet, die Breite b der Applikatorreihe 12 der Behandlungs-Vorrichtung 1 anhand der Anzahl aktiver Applikatoren 21a, 21b, 21c automatisch zu bestimmen. Aktive Applikatoren 21a, 21b, 21c sind Applikatoren, die nicht abgeschaltet, d.h. deaktiviert wurden. Zusätzlich oder auch alternativ kann vorgesehen sein, dass der Fahrer des Trägerfahrzeugs 30 über ein HMI (Human Machine Interface - Mensch-Maschine-Schnittstelle) des Trägerfahrzeugs 30 manuell eingibt, welche Applikatoren 21a, 21b, 21c aktiv und welche inaktiv sind.

Im vorliegenden Ausführungsbeispiel ist das Flächenbestimmungs-Modul 71 dazu ausgebildet, durch Auswerten der Fahrgeschwindigkeit v, der Fahrdauer T und der Breite b die Größe der Fläche A zu bestimmen. Hierbei kann das Flächenbestimmungs-Modul 71 dazu ausgebildet sein, z.B. sich verändernde Fahrgeschwindigkeiten v und/oder veränderte Breiten n zu berücksichtigen.

Das Leistungsbestimmungs-Modul 72 ist im vorliegenden Ausführungsbeispiel dazu ausgebildet, die elektrischen Gleichstromstärke und die elektrische Gleichspannungshöhe auf der Sekundärseite des HV-Umrichters 20 zu erfassen und auszuwerten, um den Wert indikativ für die elektrische Gleichstrom-Leistungsabgabe P zu bestimmen.

Das Biomassen-Bestimmungs-Modul 73 ist im vorliegenden Ausführungsbeispiel dazu ausgebildet, die von dem Flächenbestimmungs-Modul 71 bestimmte Größe der Fläche A und die von dem Leistungsbestimmungs-Modul 72 bestimmte elektrische Gleichstrom-Leistungsabgabe P einzulesen. Des Weiteren ist das Biomassen-Bestimmungs-Modul 73 im vorliegenden Ausführungsbeispiel dazu ausgebildet, einen vegetationsspezifischen Faktor F und einen Wert indikativ für einen elektrischen Widerstand R des Bodens der behandelten Fläche A einzulesen und zu berücksichtigen, um die Biomasse B zu bestimmen.

Durch den vegetationsspezifischen Faktor F kann z.B. eine Art und/oder eine Form und/oder eine Größe und/oder ein Zustand der Pflanzen berücksichtigt werden. Hierzu kann der vegetationsspezifische Faktor F auf einer Mehrzahl an entsprechenden Teilfaktoren beruhen. Die Teilfaktoren können von einem Fahrer des Trägerfahrzeugs 30 über ein **HMI** des Trägerfahrzeugs 30 manuell eingegeben werden oder auch automatisch, z.B. mittels Bildauswertung oder einem anders gearteten Sensorsystem, z.B. gepaart mit archivierten Werten in einer abgespeicherten Tabelle, bestimmt werden, um dann den vegetationsspezifischen Faktor F zu bestimmen.

Der Wert indikativ für einen elektrischen Widerstand R des Bodens kann vorab oder auch zeitgleich während der Bestimmung der Biomasse B messtechnisch erfasst werden oder alternativ über ein **HMI** des Trägerfahrzeugs manuell eingegeben oder alternativ aus einer archivierten Tabelle ausgelesen werden.

Das Biomassen-Bestimmungs-Modul 73 stellt dann einen Wert indikativ für die Biomasse B der mit der Behandlungs-Vorrichtung 1 durch Beaufschlagen mit elektrischem Gleichstrom behandelten Pflanzen bereit, z.B. bezogen auf eine Flächeneinheit, die z.B. mit dem **HMI** ausgegeben werden oder auf einem Datenträger gespeichert werden kann. Ferner kann das Biomassen-Bestimmungs-Modul 73 einen Wert indikativ für die Biomasse B bezogen auf eine Flächeneinheit für einen z.B. vom Fahrer bestimmten Flächenabschnitt der Fläche A bereitstellen, also für eine frei konfigurierbare Teilfläche der Fläche A. Ein Konfigurieren einer derartigen Teilfläche kann mithilfe eines **HMI** des Trägerfahrzeugs 30 erfolgen.

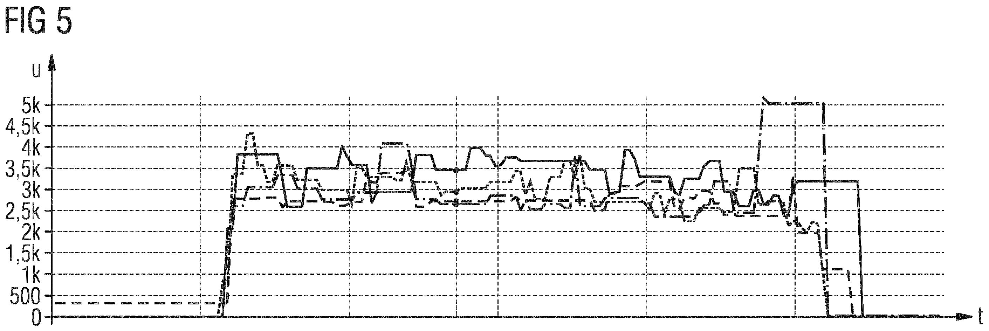

Es wird nun zusätzlich auf Figur 5 Bezug genommen.

Dargestellt sind vier elektrische Spannungsverläufe einer elektrischen Gleichspannung U über die Zeit t jeweils zwischen drei Applikatoren 21a, 21b, 21c einer Applikatorreihe 12 während einer Beaufschlagung von grünen Kartoffeln als Pflanzen auf der Fläche A mit elektrischem Gleichstrom, wobei zwei der drei Applikatoren 21a, 21c z.B. mit der elektrischen Gleichspannung U mit positiver Polarität beaufschlagt wurden und einer der drei Applikatoren 21b z.B. mit einer elektrischen Gleichspannung U mit negativer Polarität beaufschlagt wurde.

Zu erkennen ist, dass die Werte für die elektrische Gleichspannung U im Bereich von 2,5 kV und 4 kV liegen, wobei die elektrische Gleichspannung U hier auch als Stellgröße u eines Reglers aufgefasst werden kann.

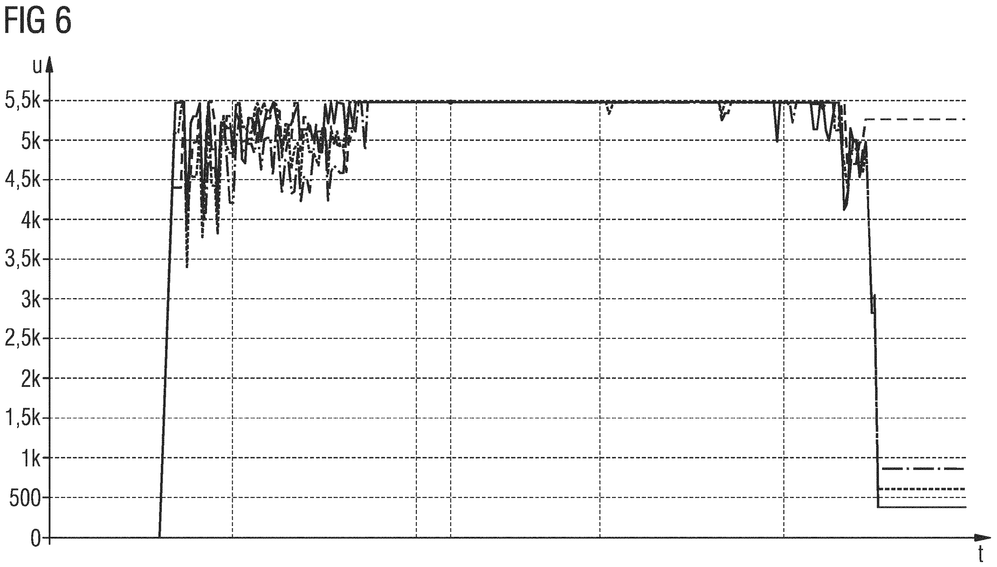

Es wird nun zusätzlich auf Figur 6 Bezug genommen.

Dargestellt ist der elektrische Spannungsverlauf zwischen drei Applikatoren 21a, 21b, 21c einer Applikatorreihe 12 während einer Beaufschlagung von trockenem Hafer mit einer Höhe von 1,5 m als Pflanzen auf der Fläche A mit elektrischem Gleichstrom.

Zu erkennen ist, dass die Werte für die elektrische Gleichspannung U zu Beginn sehr stark im Bereich von 4 kV und 5,5 kV aufgrund eines unregelmäßigen Pflanzenbewuchs schwanken und später konstant den Wert 5,5 kV aufweisen, wobei 5,5 kV der Maximalwert der von der Behandlungs-Vorrichtung 1 bereitgestellten elektrischen Gleichspannung U ist.

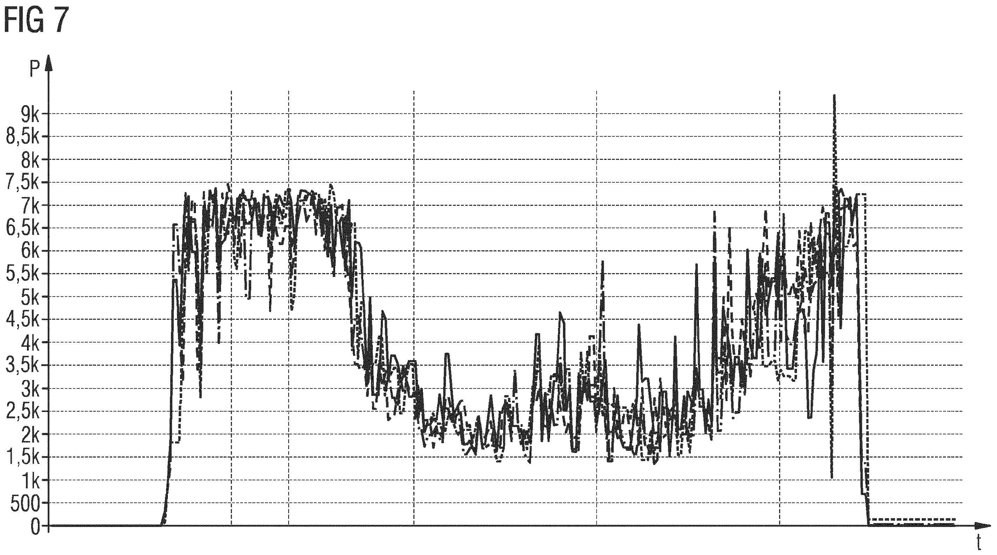

Es wird nun zusätzlich auf Figur 7 Bezug genommen.

Dargestellt ist die elektrische Gleichspannungs-Leistungsabgabe P, die auch als Augenblickswert aufgefasst werden kann, korrespondierend zu der Figur 6.

Ein Absolutwert für die Biomasse B auf der behandelten Fläche A kann z.B. durch eine Integration der elektrischen Gleichstrom-Leistungsabgabe P über die Zeit t bestimmt werden. Dies geschieht z.B. durch eine numerische Integration, sowie durch Berücksichtigung des vegetationsspezifischen Faktors F und des Wertes indikativ für einen elektrischen Widerstand R des Bodens der behandelten Fläche A. Mit anderen Worten, es können für Flächenabschnitte der Fläche A jeweilige Teilwerte indikativ für die Biomasse B bestimmt werden und dann zum Absolutwert für die Biomasse B aufsummiert werden.

Zu erkennen ist, dass zu Beginn die elektrische Gleichspannungs-Leistungsabgabe P sehr stark schwankt, sich aber im Bereich der Maximalleistung befindet. Später fällt die elektrische Gleichspannungs-Leistungsabgabe P stark ab, d.h. der Regler schafft es nicht, die Pflanzen mit einer höheren elektrischen Gleichspannungs-Leistungsabgabe P zu beaufschlagen.

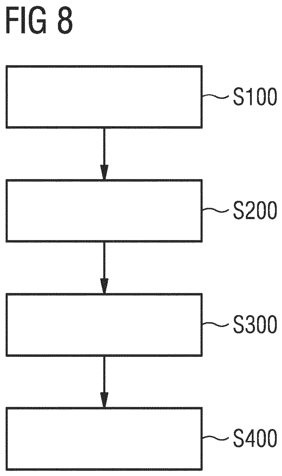

Es wird nun unter zusätzlicher Bezugnahme auf die Figur 8 ein Verfahrensablauf zum Betrieb der Behandlungs-Vorrichtung 1 des Trägerfahrzeugs 30 mit der Auswerte-Vorrichtung 70 zur Biomassen-Bestimmung erläutert.

Auf z.B. eine Inbetriebnahme der Behandlungs-Vorrichtung 1 hin erfolgt in einem ersten Schritt S100 ein gezieltes Auftragen eines Stoffgemische auf mindestens ein Pflanzenteil, wobei das Stoffgemisch mindestens eine den elektrischen Übergangswiderstand im Bereich der pflanzlichen Oberfläche senkende Komponente aufweist, wobei das Stoffgemisch mindestens eine erste Komponente aufweist, die mindestens eine oberflächenaktive Substanz ausgewählt aus der Gruppe bestehend aus Tensiden enthält, und mindestens eine zweite Komponente aufweist, die mindestens eine viskositätserhöhende Substanz ausgewählt aus der Gruppe bestehend aus reinen Kieselsäuren, pyrogenen Kieselsäuren, Mischoxiden, Magnesium-Schichtsilikaten, organischen Additiven auf der Basis von biogenen Ölen und deren Derivaten, Polyamiden und modifizierten Kohlenhydraten enthält. Abweichend vom vorliegenden Ausführungsbeispiel kann das Stoffgemisch eine oder mehrere Komponenten aufweisen, wobei eine der Komponenten Mehrfachwirkungen aufweist, wie z.B. die Wirkung einer oberflächenaktiven Substanz und die Wirkung einer viskositätserhöhenden Substanz.

**In** einem weiteren Schritt S200 wird der Wert indikativ für eine elektrische Gleichstrom-Leistungsabgabe P über Applikatoren 21a, 21b, 21c der Behandlungs-Vorrichtung 1 zur Behandlung von Pflanzen erfasst.

Hierzu wird im vorliegenden Ausführungsbeispiel eine an den Applikatoren 21a, 21b, 21c anliegende elektrische Gleichspannung U und der durch die Applikatoren 21a, 21b, 21c fließende elektrische Gleichstrom I erfasst und ausgewertet, um den Wert indikativ für die elektrische Gleichstrom-Leistungsabgabe P zu bestimmen.

**In** einem weiteren Schritt S300 wird der Wert indikativ für die Größe einer mit der Behandlungs-Vorrichtung 1 behandelten Fläche A erfasst. Hierzu wird im vorliegenden Ausführungsbeispiel die Fahrgeschwindigkeit v des Trägerfahrzeugs 30 und die Breite b der Applikatorreihe 12 erfasst und ausgewertet.

**In** einem weiteren Schritt S400 wird der Wert indikativ für die Biomasse B durch Auswerten des Wertes indikativ für die elektrische Gleichstrom-Leistungsabgabe P und des Wertes indikativ für die Größe der mit der Behandlungs-Vorrichtung 1 behandelten Fläche A bestimmt. Ferner werden im vorliegenden Ausführungsbeispiel der pflanzenspezifische Faktor F und der Wert indikativ für den elektrischen Widerstand R des Bodens der behandelten Fläche A berücksichtigt.

Abweichend vom vorliegenden Ausführungsbeispiel kann die Reihenfolge der Schritte auch eine andere sein. Ferner können mehrere Schritte auch zeitgleich bzw. simultan ausgeführt werden. Des Weiteren können auch abweichend vom vorliegenden Ausführungsbeispiel einzelne Schritte übersprungen oder ausgelassen werden.

So wird ein hinsichtlich der Aktualität und/oder Auflösung verbessertes Verfahren zur Biomassen-Bestimmung bereitgestellt.

### Bezugszeichenliste

- 1: Behandlungs-Vorrichtung
- 2: Applikatoreinheit
- 10: erstes Modul
- 11: Düse
- 12: Applikatorreihe
- 13: erste Trägerkonstruktion
- 14: Flüssigkeitsbehälter
- 15: übergangswiderstandsenkendes Medium
- 16: Sensor
- 20: zweites Modul
- 21a: elektrischer Applikator
- 21b: elektrischer Applikator
- 21c: elektrischer Applikator
- 24: zweite Trägerkonstruktion
- 30: Trägerfahrzeug
- 31: Zapfwelle
- 32: Generator
- 33: Transformations- und Kontrolleinheit
- 70: Auswerte-Vorrichtung
- 71: Flächenbestimmungs-Modul
- 72: Leistungsbestimmungs-Modul
- 73: Biomassen-Bestimmungs-Modul
- 74: HV-Umrichter
- A: Fläche
- b: Breite
- B: Biomasse
- F: Faktor
- FR: Fahrtrichtung
- I: elektrischer Gleichstrom
- P: Gleichstrom-Leistungsabgabe
- R: elektrischer Widerstand
- SW: Sollwert
- t: Zeit
- T: Fahrtdauer
- U: elektrische Gleichspannung
- v: Fahrgeschwindigkeit
- S100: Schritt
- S200: Schritt
- S300: Schritt
- S400: Schritt

## Patentansprüche

1. Verfahren zur Biomassen-Bestimmung von Pflanzen, insbesondere während einer Sikkation von Feldfrüchten, zur Gründüngungskontrolle oder zur Kontrolle von Beikraut, mit den Schritten:
(S200) mit einem Leistungsbestimmungs-Modul (72) Erfassen zumindest eines Wertes indikativ für eine elektrische Gleichstrom-Leistungsabgabe (P) über Applikatoren (21a, 21b, 21c) einer Behandlungs-Vorrichtung (1) zur Behandlung von Pflanzen durch Beaufschlagen mit elektrischem Gleichstrom, wobei zum Erfassen zumindest eines Wertes indikativ für eine elektrische Gleichstrom-Leistungsabgabe (P) eine an den Applikatoren (21a, 21b, 21c) anliegende elektrische Gleichspannung (U) und ein durch die Applikatoren (21a, 21b, 21c) fließender elektrischer Gleichstrom (I) erfasst und ausgewertet wird,
(S300) mit einem Flächenbestimmungs-Modul (71) Erfassen zumindest eines Wertes indikativ für die Größe einer mit der Behandlungs-Vorrichtung (1) behandelten Fläche (A), und
(S400) mit einem Biomassen-Bestimmungs-Modul (73) Bestimmen eines Wertes indikativ für die Biomasse (B) der Pflanzen auf der behandelten Fläche (A) als indikatives Maß für die im Boden aufgenommene Kohlendioxidmenge durch Auswerten zumindest des Wertes indikativ für eine elektrische Gleichstrom-Leistungsabgabe (P) und des Wertes indikativ für die Größe der mit der Behandlungs-Vorrichtung (1) behandelten Fläche (A).

2. Verfahren nach Anspruch 1, wobei die Behandlungs-Vorrichtung (1) dazu ausgebildet ist, Pflanzen mit einer einem Sollwert (SW) entsprechenden elektrischen Gleichstrom-Leistungsabgabe (P) zu beaufschlagen.

3. Verfahren nach Anspruch 1 oder 2, wobei zum Erfassen zumindest eines Wertes indikativ für die Größe einer mit der Behandlungs-Vorrichtung (1) behandelten Fläche (A) zumindest eine Fahrgeschwindigkeit (v) eines Trägerfahrzeugs (30) und/oder eine Breite (b) einer Applikatorreihe (12) der Behandlungs-Vorrichtung (1) quer zu einer Fahrtrichtung (FR) des Trägerfahrzeugs (30) erfasst und ausgewertet wird.

4. Verfahren nach einem der Ansprüche 1 bis 3, wobei zum Bestimmen des Wertes indikativ für die Biomasse (B) ein vegetationsspezifischer Faktor (F) berücksichtigt wird.

5. Verfahren nach einem der Ansprüche 1 bis 4, wobei zum Bestimmen des Wertes indikativ für die Biomasse (B) ein Wert indikativ für einen elektrischen Widerstand (R) des Bodens der behandelten Fläche (A) berücksichtigt wird.

6. Verfahren nach einem der Ansprüche 1 bis 5, ferner aufweisend den Schritt (S100):
gezieltes Auftragen eines Stoffgemisches auf mindestens ein Pflanzenteil, wobei das Stoffgemisch mindestens eine den elektrischen Übergangswiderstand im Bereich der pflanzlichen Oberfläche senkende Komponente aufweist, wobei das Stoffgemisch mindestens eine erste Komponente aufweist, die mindestens eine oberflächenaktive Substanz ausgewählt aus der Gruppe bestehend aus Tensiden enthält, und mindestens eine zweite Komponente aufweist, die mindestens eine viskositätserhöhende Substanz ausgewählt aus der Gruppe bestehend aus reinen Kieselsäuren, pyrogenen Kieselsäuren, Mischoxiden, Magnesium-Schichtsilikaten, organischen Additiven auf der Basis von biogenen Ölen und deren Derivaten, Polyamiden und modifizierten Kohlenhydraten enthält.

7. Computerprogrammprodukt, umfassend Befehle, die bewirken, dass die Vorrichtung der Ansprüche 8 bis 12 die Verfahrensschritte nach Ansprüchen 1 bis 6 ausführt.

8. Auswerte-Vorrichtung (70) zur Biomassen-Bestimmung einer mit der Behandlungs-Vorrichtung (1) behandelten Fläche (A), insbesondere während einer Sikkation von Feldfrüchten, zur Gründüngungskontrolle oder zur Kontrolle von Beikraut, wobei die Auswerte-Vorrichtung (70) dazu ausgebildet ist, zumindest einen Wert indikativ für eine elektrische Gleichstrom-Leistungsabgabe (P) über Applikatoren (21a, 21b, 21c) der Behandlungs-Vorrichtung (1) zur Behandlung von Pflanzen durch Beaufschlagen mit elektrischem Gleichstrom zu erfassen, wobei die Auswerte-Vorrichtung (70) dazu ausgebildet ist, eine an den Applikatoren (21a, 21b, 21c) anliegende elektrische Gleichspannung (U) und einen durch die Applikatoren (21a, 21b, 21c) fließenden elektrischen Gleichstrom (I) zu erfassen und auszuwerten, um zumindest einen Wert indikativ für eine elektrische Gleichstrom-Leistungsabgabe (P) zu erfassen, zumindest einen Wert indikativ für die Größe einer mit der Behandlungs-Vorrichtung (1) behandelten Fläche (A) zu erfassen und einen Wert indikativ für die Biomasse (B) der Pflanzen auf der behandelten Fläche (A) als indikatives Maß für die im Boden aufgenommene Kohlendioxidmenge durch Auswerten zumindest des Wertes indikativ für eine elektrische Gleichstrom-Leistungsabgabe (P) und des Wertes indikativ für die Größe der mit der Behandlungs-Vorrichtung (1) behandelten Fläche (A) zu bestimmen.

9. Auswerte-Vorrichtung (70) nach Anspruch 8, wobei die Behandlungs-Vorrichtung (1) dazu ausgebildet ist, Pflanzen mit einer einem Sollwert (SW) entsprechenden elektrischen Gleichstrom-Leistungsabgabe (P) zu beaufschlagen.

10. Auswerte-Vorrichtung (70) nach Anspruch 8 oder 9, wobei die Auswerte-Vorrichtung (70) dazu ausgebildet ist, eine Fahrgeschwindigkeit (v) eines Trägerfahrzeugs (30) und/oder eine Breite (b) einer Applikatorreihe (12) der Behandlungs-Vorrichtung (1) quer zu einer Fahrtrichtung (FR) des Trägerfahrzeugs (30) zu erfassen und auszuwerten, um zumindest einen Wert indikativ für die Größe einer mit der Behandlungs-Vorrichtung (1) behandelten Fläche (A) zu erfassen.

11. Auswerte-Vorrichtung (70) nach einem der Ansprüche 8 bis 10, wobei die Auswerte-Vorrichtung (70) dazu ausgebildet ist, zum Bestimmen des Wertes indikativ für die Biomasse (B) einen vegetationsspezifischen Faktor (F) zu berücksichtigen.

12. Auswerte-Vorrichtung (70) nach einem der Ansprüche 8 bis 11, wobei die Auswerte-Vorrichtung (70) dazu ausgebildet ist, zum Bestimmen des Wertes indikativ für die Biomasse (B) ein Wert indikativ für einen elektrischen Widerstand (R) des Bodens der behandelten Fläche (A) zu berücksichtigen.

13. Trägerfahrzeug (30), insbesondere selbstfahrende Landmaschine oder Anhänger, mit einer Auswerte-Vorrichtung (70) nach einem der Ansprüche 8 bis 12.

14. Bausatz, enthaltend Komponenten einer Auswerte-Vorrichtung (70) nach einem der Ansprüche 8 bis 12 zum Bilden eines Trägerfahrzeugs (30) nach Anspruch 13.

## Claims

1. A method for determination of biomass of plants, in particular during desiccation of field crops, for controlling green manure or for controlling weeds, the method comprising the steps of:
(S200) using a power determination module (72), detecting at least one value indicative of an electric direct-current power output (P) via applicators (21a, 21b, 21c) of a treatment device (1) for treating plants by applying direct electric current, wherein for detecting at least one value indicative of an electric direct-current power output (P), an electric direct voltage (U) applied to the applicators (21a, 21b, 21c) and an electric direct-current (I) flowing through the applicators (21a, 21b, 21c) is detected and evaluated,
(S300) using an area determination module (71), detecting at least one value indicative of the size of an area (A) treated with the treatment device (1), and
(S400) using a biomass determination module (73), determining a value indicative of the biomass (B) of the plants on the treated area (A) as an indicative measure of the amount of carbon dioxide absorbed in the soil by evaluating at least the value indicative of an electric direct-current power output (P) and the value indicative of the size of the area (A) treated with the treatment device (1).

2. The method of claim 1, wherein the treatment device (1) is designed to apply an electric direct-current power output (P) corresponding to a setpoint value (SW) to plants.

3. The method of claim 1 or 2, wherein, in order to detect at least one value indicative of the size of an area (A) treated with the treatment device (1), at least a driving speed (v) of a carrier vehicle (30) and/or a width (b) of an applicator row (12) of the treatment device (1) transverse to a direction of travel (FR) of the carrier vehicle (30) is detected and evaluated.

4. The method of any of claims 1 to 3, wherein a vegetation-specific factor (F) is taken into account for determining the value indicative of the biomass (B).

5. The method of any of claims 1 to 4, wherein a value indicative of an electric resistance (R) of the soil of the treated area (A) is taken into account for determining the value indicative of the biomass (B).

6. The method of any of claims 1 to 5, further comprising the step (S100):
targetedly applying a substance mixture to at least one plant part, wherein the substance mixture has at least one component which lowers the electric contact resistance in the area of the plant surface, wherein the substance mixture has at least one first component which contains at least one surface-active substance selected from the group consisting of surfactants and at least one second component comprising at least one viscosity-increasing substance selected from the group consisting of pure silicas, pyrogenic silicas, mixed oxides, magnesium layer silicates, organic additives based on biogenic oils and derivatives thereof, polyamides and modified carbohydrates.

7. A computer program product comprising instructions that cause the device of claims 8 to 12 to perform the method steps according to claims 1 to 6.

8. An evaluation device (70) for determining the biomass of an area (A) treated with the treatment device (1), in particular during desiccation of field crops, for controlling green manure or for controlling weeds, wherein the evaluation device (70) is designed to detect at least one value indicative of an electric direct-current power output (P) via applicators (21a, 21b, 21c) of the treatment device (1) for treating plants by applying direct electric current, wherein the evaluation device (70) is designed to detect and evaluate an electric direct voltage (U) applied to the applicators (21a, 21b, 21c) and an electric direct current (I) flowing through the applicators (21a, 21b, 21c) in order to detect at least one value indicative of an electric direct-current power output (P), to detect at least one value indicative of the size of an area (A) treated with the treatment device (1) and to determine a value indicative of the biomass (B) of the plants on the treated area (A) as an indicative measure of the amount of carbon dioxide absorbed in the soil by evaluating at least the value indicative of an electric direct-current power output (P) and the value indicative of the size of the area (A) treated with the treatment device (1).

9. The evaluation device (70) of claim 8, wherein the treatment device (1) is designed to apply an electric direct-current power output (P) corresponding to a setpoint value (SW) to plants.

10. The evaluation device (70) of claim 8 or 9, wherein the evaluation device (70) is designed to detect and evaluate a driving speed (v) of a carrier vehicle (30) and/or a width (b) of an applicator row (12) of the treatment device (1) transverse to a direction of travel (FR) of the carrier vehicle (30) in order to detect at least one value indicative of the size of an area (A) treated with the treatment device (1).

11. The evaluation device (70) of any of claims 8 to 10, wherein the evaluation device (70) is designed to take into account a vegetation-specific factor (F) for determining the value indicative of the biomass (B).

12. The evaluation device (70) of any of claims 8 to 11, wherein the evaluation device (70) is designed to take into account a value indicative of an electric resistance (R) of the soil of the treated area (A) for determining the value indicative of the biomass (B).

13. A carrier vehicle (30), in particular a self-propelled agricultural machine or trailer, having an evaluation device (70) of any of claims 8 to 12.

14. A kit containing components of an evaluation device (70) of any of claims 8 to 12 for forming a carrier vehicle (30) of claim 13.

## Revendications

1. Procédé pour déterminer la biomasse végétale, en particulier lors du séchage des récoltes, pour contrôler l'engrais vert ou les mauvaises herbes, comprenant les étapes suivantes:
(S200) par un module de détermination de la puissance (72), détecter au moins une valeur indicative d'une puissance électrique en courant continu (P) au moyen d'applicateurs (21a, 21b, 21c) d'un dispositif de traitement (1) pour le traitement de plantes par application de courant électrique continu, dans lequel, afin de détecter au moins une valeur indicative d'une puissance électrique en courant continu (P), on détecte et on évalue une tension électrique en courant continu (U) appliquée aux applicateurs (21a, 21b, 21c) et un courant électrique continu (I) circulant à travers les applicateurs (21a, 21b, 21c),
(S300) par un module de détermination de surface (71), acquérir au moins une valeur indicative des dimensions d'une surface (A) traitée par le dispositif de traitement (1), et
(S400) par un module de détermination de la biomasse (73), déterminer une valeur indicative de la biomasse (B) des plantes sur la surface (A) traitée comme mesure indicative de la quantité de dioxyde de carbone absorbée par le sol, en évaluant au moins la valeur indicative d'une puissance électrique en courant continu (P) et la valeur indicative de la dimension de la surface traitée par le dispositif de traitement (1).

2. Procédé selon la revendication 1, dans lequel le dispositif de traitement (1) est configuré pour appliquer aux plantes une puissance électrique en courant continu (P) correspondant à une valeur nominale (SW).

3. Procédé selon la revendication 1 ou 2, dans lequel, pour détecter au moins une valeur indicative des dimensions d'une surface (A) traitée par le dispositif de traitement (1), on détecte et on évalue au moins une vitesse de déplacement (v) d'un véhicule de transport (30) et/ou une largeur (b) d'une série d'applicateurs (12) du dispositif de traitement (1) transversalement par rapport à une direction de déplacement (FR) du véhicule de transport (30).

4. Procédé selon l'une des revendications 1 à 3, dans lequel, afin de déterminer la valeur indicative de la biomasse (B), on prend en considération un facteur spécifique de la végétation (F).

5. Procédé selon l'une des revendications 1 à 4, dans lequel, afin de déterminer la valeur indicative de la biomasse (B), on prend en considération une valeur indicative d'une résistance électrique (R) du sol de la surface (A) traitée.

6. Procédé selon l'une des revendications 1 à 5, comprenant en outre l'étape (S100) de:
appliquer de manière ciblée un mélange de substances sur au moins une partie de la plante, dans lequel le mélange de substances comprend au moins un composant qui réduit la résistance électrique de transition dans la zone de la surface végétale, dans lequel le mélange de substances comprend au moins un premier composant contenant au moins une substance tensioactive choisie dans le groupe constitué de tensioactifs et au moins un deuxième composant contenant au moins une substance augmentant la viscosité choisie dans le groupe constitué d'acides siliciques purs, acides siliciques pyrogéniques, oxydes mixtes, silicates stratifiés de magnésium, additifs organiques à base d'huiles biogéniques et leurs dérivés, polyamides et glucides modifiés.

7. Produit informatique logiciel comprenant des commandes qui induisent le dispositif des revendications 8 à 12 à exécuter les étapes du procédé des revendications 1 à 6.

8. Dispositif d'évaluation (70) pour déterminer la biomasse d'une surface (A) traitée par le dispositif de traitement (1), en particulier lors du séchage des récoltes, pour contrôler l'engrais vert ou pour contrôler les mauvaises herbes, dans lequel le dispositif d'évaluation (70) est configuré pour détecter au moins une valeur indicative d'une puissance électrique en courant continu (P) au moyen d'applicateurs (21a, 21b, 21c) du dispositif de traitement (1) pour le traitement de plantes par application de courant électrique continu, dans lequel le dispositif d'évaluation (70) est configuré pour détecter et évaluer une tension électrique continue (U) appliquée aux applicateurs (21a, 21b, 21c) et un courant électrique continu (I) circulant à travers les applicateurs (21a, 21b, 21c), afin de détecter au moins une valeur indicative d'une puissance électrique en courant continu (P), pour détecter au moins une valeur indicative des dimensions d'une surface (A) traitée par le dispositif de traitement (1) et pour déterminer une valeur indicative de la biomasse (B) des plantes sur la surface (A) traitée comme mesure indicative de la quantité de dioxyde de carbone absorbée dans le sol, en évaluant au moins la valeur indicative d'une puissance électrique en courant continu (P) et la valeur indicative de la dimension de la surface (A) traitée par le dispositif de traitement (1).

9. Dispositif d'évaluation (70) selon la revendication 8, dans lequel le dispositif de traitement (1) est configuré pour appliquer aux plantes une puissance électrique en courant continu (P) correspondant à une valeur nominale (SW).

10. Dispositif d'évaluation (70) selon la revendication 8 ou 9, dans lequel le dispositif d'évaluation (70) est configuré pour détecter et évaluer une vitesse de déplacement (v) d'un véhicule de transport (30) et/ou une largeur (b) d'une série d'applicateurs (12) du dispositif de traitement (1) transversalement par rapport à une direction de déplacement (FR) du véhicule de transport (30), afin de détecter au moins une valeur indicative de la dimension d'une surface (A) traitée par le dispositif de traitement (1).

11. Dispositif d'évaluation (70) selon l'une des revendications 8 à 10, dans lequel le dispositif d'évaluation (70) est configuré pour prendre en considération un facteur spécifique de la végétation (F) afin de déterminer la valeur indicative de la biomasse (B).

12. Dispositif d'évaluation (70) selon l'une des revendications 8 à 11, dans lequel le dispositif d'évaluation (70) est configuré pour prendre en considération une valeur indicative de la résistance électrique (R) du sol de la surface (A) traitée afin de déterminer la valeur indicative de la biomasse (B).

13. Véhicule de transport (30), en particulier machine agricole automotrice ou remorque, avec un dispositif d'évaluation (70) selon l'une des revendications 8 à 12.

14. Kit contenant des composants d'un dispositif d'évaluation (70) selon l'une des revendications 8 à 12 pour former un véhicule de transport (30) selon la revendication 13.
